# EUROPEAN PATENT SPECIFICATION

(11) **EP 1 622 382 B1**
(45) Date of publication and mention of the grant of the patent: **17.10.2007**
(21) Application number: 04017386.6
(22) Date of filing: 22.07.2004
(51) Int. Cl.: H04N 7/24, H04L 12/64

(54) **Data transmission synchronization scheme**
Datenübertragungssynchronisationsschema
Schéma de synchronisation pour un système de transmission

(43) Date of publication of application: 01.02.2006
(73) Proprietor: Harman Becker Automotive Systems GmbH, 76307 Karlsbad (DE)
(72) Inventor: Teichner, Detlef, Dr., 78126 Koenigsfeld (DE); Schmidtmann, Christopher, 78050 Villingen-Schwenningen (DE); Nitzpon, Hans-Jürgen, Dr., 76337 Waldbronn (DE)
(74) Representative: Grünecker, Kinkeldey, Stockmair & Schwanhäusser Anwaltssozietät

(56) References cited:
- EP-A- 0 838 926
- WO-A-96/02098
- US-A- 5 566 174
- US-A- 6 075 576
- "TRANSMISSION OF AN MPEG ENCODED INFORMATION SIGNAL USING TIME STAMPS" RESEARCH DISCLOSURE, KENNETH MASON PUBLICATIONS, HAMPSHIRE, GB, no. 375, 1 July 1995 (1995-07-01), page 508, XP000524830 ISSN: 0374-4353
- KUNZMAN A J ET AL: "1394 HIGH PERFORMANCE SERIAL BUS: THE DIGITAL INTERFACE FOR ATV" IEEE TRANSACTIONS ON CONSUMER ELECTRONICS, IEEE INC. NEW YORK, US, vol. 41, no. 3, August 1995 (1995-08), pages 893-900, XP000539552 ISSN: 0098-3063
- BLOKS R H J: "The IEEE-1394 high speed serial bus" PHILIPS JOURNAL OF RESEARCH, ELSEVIER, AMSTERDAM, NL, vol. 50, no. 1, 1996, pages 209-216, XP004008212 ISSN: 0165-5817
- TEICHNER D: "NETZWERK-KONZEPTE FUER VIDEO- UND AUDIOFUNKTIONEN IM AUTO" FERNSEH UND KINOTECHNIK, VDE VERLAG GMBH. BERLIN, DE, vol. 54, no. 3, March 2000 (2000-03), pages 119-120,122, XP000966342 ISSN: 0015-0142
- HECK P ET AL: "MEDIA ORIENTED SYNCHRONOUS TRANSFER - A NETWORK PROTOCOL FOR HIGH QUALITY, LOW COST TRANSFER OF SYNCHRONOUS, ASYNCHRONOUS, AND CONTROL DATA ON FIBER OPTIC" PREPRINTS OF PAPERS PRESENTED AT THE AES CONVENTION, XX, XX, vol. 4551, no. 4551, September 1997 (1997-09), pages 1-10,5PAGES, XP001121596

## Description

The present invention relates to the re-synchronization of data transmitted over a communication link. In particular, the present invention relates to a method and system for real-time data transmission over a communication link in a vehicle and for re-synchronization at the receiving site.

Nowadays, vehicles include a plurality of information and entertainment components. For this purpose, current vehicles use a high speed network as an infrastructure for managing the components in a vehicle that need to interact. As a standard for high speed multimedia busses in vehicles, the MOST (Media Oriented Systems Transport) technology has found broad acceptance as a vehicle multimedia bus. This bus allows a cost efficient communication between all functional blocks of entertainment and information systems such as CD and DVD players, CD changers, cell phones, video systems, in-car PC's etc. The network bus described by the MOST standard offers a speed of 24.8 Mbits/second which makes it about 100 times faster than controller-area network (CAN) busses. CAN busses are typically used in power train applications. The MOST specification defines the hardware interface needed to communicate over the bus, which is preferably a plastic optical fiber.

From the article "Transmission of an MPEG Encoded Information Signal Using Time Stamps", Research Disclosure, Kenneth Mason Publications, Hampshire, July 1995, the transmission of MPEG encoded video / audio data in packetized form is known. The presence or absence of time stamps in the packets is detected at the transmitting side. Time stamps are generated and added if a time stamp is not present.

WO-A-96/02098 describes the transmission of MPEG encoded signals over a bus to which a plurality of processing apparatuses is connected. The data is transmitted in the form of packets over the bus employing a time-slot allocation protocol. Time stamps are added to each packet irrespective of its content. These time stamps contain the time value of the encoder clock at the time of sending.

The communication on a MOST bus is based on predefined frames including a synchronous area and an asynchronous area. The synchronous and asynchronous areas of a frame may have an arbitrary length wherein a message to be transmitted may be distributed over a plurality of frames. The MOST standard also defines an asynchronous packet-transfer mechanism wherein each packet comprises a header portion and a data portion.

The MOST bus is a synchronous, circuit-switch network. "Synchronous" means that a single timing master sets the clock for the whole network. All other devices are correspondingly synchronized.

Each MOST frame contains 512 bits and is divided into three separate portions. A first portion having a length of one byte is intended for synchronization administration of the frames. A second portion contains the data to be transmitted, and a last portion having a length of one byte enables a detection of transmission errors. 62 bytes remain for data transmission per frame. This data area may be divided into three different segments intended for transmission of different types of data, namely synchronized data, asynchronous data, and control and status data.

Although the MOST bus configuration is scalable in that the network can run at any clock frequency that the timing master sets, the bus will only run at that frequency for which the individual MOST bus implementation is provided. Generally, the MOST bus provided in vehicles has a fixed synchronizing scheme having a clock rate of 44.1 kHz. Such a clock rate is adapted to the transmission of audio data over the communication link.

One problem of such MOST bus implementations is that other data to be transmitted between information and entertainment devices within a vehicle require other clock rates. Conventionally, the individual devices convert their data stream and clock rate to the bus configuration. Such data rate conversion requires additional computational effort for adapting the data rate to the fixed communication link data rate.

It is another problem of such bus implementations that it is restricted to a particular transmission scheme adapted to a particular kind of data. A transmission of a different kind of data can not be accomplished with the same efficiency.

It is consequently the object of the present invention to provide a method and a system for transmitting a kind of data at any clock rate over a communication link having a predefined fixed clock rate.

This is achieved by the features of the independent claims.

It is the particular approach of the present invention to enable an automatic synchronization of the receiver's clock to the transmitter's clock in accordance with the kind of transmitted data. Based on the type of synchronization information available from the stream of data to be transmitted, appropriate synchronization information is generated and included into the transmitted data such that a receiver can perfectly synchronize to the transmitter's clock.

The present invention overlays a new synchronization scheme to the fixed synchronization scheme of the communication link wherein the new synchronization automatically adapts to the kind of data to be transmitted. The synchronization scheme only employs the fixed clock as a transmission clock. The clock synchronization between the transmitter and receiver is achieved independent therefrom. The receiver is synchronized to the transmitter by additionally transmitting synchronization information within the continuous stream of data. The synchronization information is obtained in a manner depending on the kind of data to be transmitted. Specifically, the present invention automatically makes use of synchronization information if available from the data to be transmitted. Thus, the synchronization scheme is always perfectly adapted to the data to be transmitted.

It is the particular advantage of the present invention that a real time data transmission for any kind of data rates and data formats is implemented over a fixed transmission clock communication link.

Although the data transmission is performed based on the fixed clock rate of the communication link, the clock rate for re-synchronization of the receiver to the transmitter is independent from the transmission clock rate. In particular, the resynchronization clock rate may be higher or even a fractional multiple of the communication link clock rate. This is accomplished by using an independent synchronization scheme over the fixed synchronization of the communication link.

It is a further advantage of the present invention that no synchronization of the transmitter and receiver to the clock of the communication link is required as the receiver will automatically synchronize to the transmitter's clock - independently from the clock on the communication link. Thus, an isynchronous transmission, i.e. an asynchronous transmission over a synchronous communication link of real time data is achieved.

The analysis of the stream of continuous audio and/or video data is performed based on separately provided information. In particular, the separately provided information is stored in form of look-up-table data. The analysis can thus be based on information which is separately provided and can be separately updated. In this manner, a simple adaptation of existing methods and devices is enabled. For instance, new encoding standards or transmission standards may require to be taken into account during a data stream analysis. This can be accomplished by simply updating the look-up-table data.

A non-volatile re-writable memory is provided for this purpose. In this manner, the analysis can be performed based on data which is individually updateable. Thus, the basis for the decision to generate new synchronization information is adaptable.

Preferably, the type of synchronization information available is determined based on a detection of time stamps in the stream of continuous audio and/or video data. Based on the detection result, the kind of synchronization information to be generated and included into the transmitted data stream can be selected in a simple manner.

According to a preferred embodiment, if it is determined that there are no time stamps available, new time stamps are generated as synchronization information. In this manner, a resynchronization on the receiver side is enabled by employing a packetized transmission scheme.

Preferably, time stamps which are detected within the data to be transmitted are corrected and the corrected time stamps represent the new synchronization information. In this manner, existing synchronization information can be adapted in a simple manner to the transmission configuration on the communication link.

Preferably, new time stamps are generated or existing time stamps are corrected based on a clock signal of the stream of continuous audio and/or video data to be transmitted. The synchronization can thus be made independent from the communication link's clock.

If time stamps are available for the data stream to be transmitted but there is no clock signal available, the existing time stamps are preferably maintained and supplemented by correction values. The correction values adapt the existing time stamps to the transmission configuration over the communication link. Hence, a synchronization can be achieved in a simple manner, even if no external clock signal for the data to be transmitted is available.

Preferably, the correction values are generated based on the clock of the communication link.

Preferably, a receiver detects correction values within the received information and selects the scheme employed for recovering the clock signal and the data stream accordingly.

The present invention thus enables to appropriately adapt to the type of data to be transmitted by correspondingly adjusting the synchronization scheme automatically.

Preferably, the transmitter comprises a counter for up-counting a count value in accordance with the received clock signal for generating time stamps and predetermined count intervals.

The continuous stream of data to be transmitted preferably contains audio and/or video data. By employing the synchronization scheme of the present invention, audio and video data can be transmitted on the same communication link without any costly hardware for adapting the data rate of the continuous stream of data to the communication link clock.

Preferably, the availability of time stamps within the data to be transmitted is determined based on a data format identification. Depending on the identification result, synchronization information for the new synchronization scheme is retrieved from the data stream or generated anew. The transmitter determine the data format and identifies and extracts the time stamps in accordance with the determination result. Thus, both of compressed and uncompressed data can be transmitted in an appropriate manner without pressing one kind of data into an inefficient synchronization scheme.

If the continuous stream of data is in a standardized format, the time stamps can be easily identified and extracted from the continuous stream of data. The time stamps may thus be extracted from the transport stream syntax, the program stream syntax or the packetized elementary stream syntax of the continuous stream of data in accordance with the MPEG international standard.

Preferably, time stamps extracted from the data to be transmitted are revised in order to be adapted to the data configuration of the communication link. Thus, an efficient data transmission and synchronization is enabled even if the transmission configuration (e.g. date rate, multiplexing) on the communication link does not correspond to that of the continuous data stream.

According to a preferred embodiment, the present invention determines whether or not the continuous stream of data to be transmitted comprises auxiliary information which describes properties of the data. Depending on the determination result, either available auxiliary information is extracted from the data stream or the data is analyzed in order to obtain the auxiliary information. The extracted or obtained auxiliary information is inserted into the data before transmission. As such a (re-) insertion of auxiliary information is preferably performed in accordance with a predefined data transmission scheme, any receiving unit and post-processing device adapted to that transmission scheme is enabled to appropriately process the received data without any further data format identification process.

Preferably, the determination of auxiliary information included in the data stream is based on separately provided information. This information is advantageously stored in form of look-up-table data. In this manner, the basis for the determination can be easily changed by updating the look-up-table data.

Preferably, the look-up-table data is stored in a non-volatile re-writable memory.

According to a preferred embodiment, the transmitter forms data packets from the continuous stream of data for transmission on said communication link. Hence, the present invention overlays a different synchronization scheme on the synchronization scheme of the communication link in order to enhance the transmission capabilities of the underlying communication link in a simple manner.

Preferably, each of the data packets comprises a header portion and a payload portion wherein the time stamps are inserted into the header portion together with information indicating properties of the transmitted data. By analyzing the contents of the header portion, a receiver, in particular a post processing unit, can immediately start processing the transmitted data. Consequently, processing capacity needed for analyzing the data stream and identifying the particular details thereof can thus be shifted from the receiving side to the transmitting side. This is in particular advantageous when transmitting data from a small number of transmitters to a large number of receivers. The total amount of processing power which needs to be provided within such an information and entertainment system can be reduced without adversely affecting the processing results.

Preferably, the communication link is a vehicle multi-media bus is in accordance with the international MOST standard. By applying the present invention to the fixed synchronization scheme of the MOST bus, the transmission of data over the MOST bus can be adapted to any kind of data by employing a simple hardware configuration.

Further embodiments of the present invention are the subject-matter of dependent claims.

Further features and advantages of the present invention will become apparent from the following and more particular description as illustrated in the accompanying drawings, wherein:
- Fig. 1: schematically illustrates the configuration of a transmission system transmitting data on a communication link in accordance with the present invention,
- Fig. 2: schematically illustrates the configuration of a data packet for transmission on the communication link with a fixed synchronization scheme,
- Fig. 3: schematically illustrates the transmission of a continuous stream of data in form of data packets for enabling resynchronization on the receiver side independent from a transmission scheme provided on the communication link,
- Fig. 4: depicts a schematic block diagram of a transmitter for transmitting data packets on a communication link in accordance with the present invention,
- Fig. 5: depicts a schematic block diagram of a receiver for receiving data in accordance with the present invention,
- Fig. 6: schematically illustrates a more detailed schematic block diagram of a transmitter according to a particular embodiment of the present invention,
- Fig. 7: schematically illustrates the configuration of a time stamp generator for use in a transmitter as shown Figs. 4 or 6,
- Fig. 8.: schematically illustrates a transmission scheme in accordance with the present invention by generating new time stamps,
- Fig. 9.: schematically illustrates a transmission scheme in accordance with the present invention by employing a re-stamping approach, and
- Fig. 10: schematically illustrates the transmission scheme in accordance with the present invention for generating new synchronization information including a correction value.

Illustrative embodiments of the present invention will now be described with reference to the drawings.

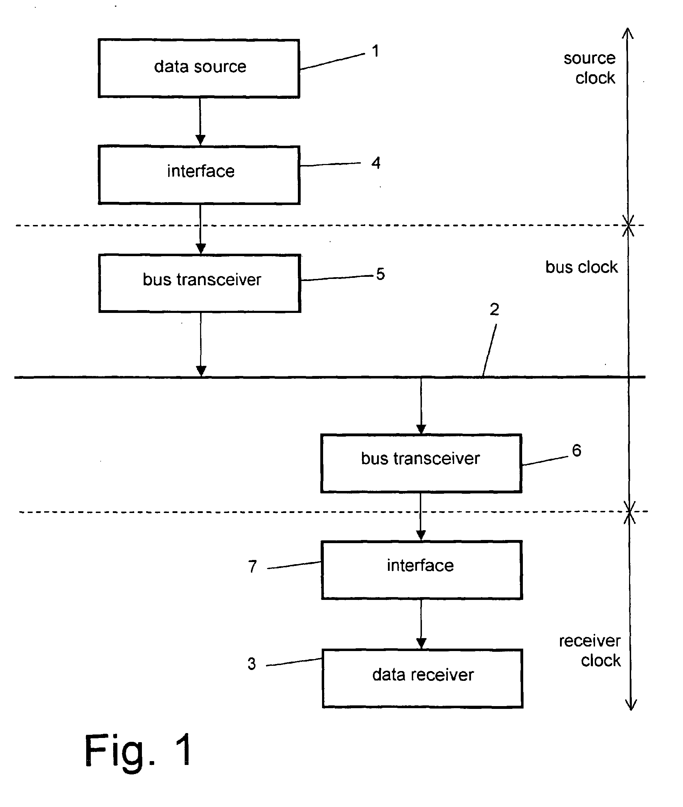

The general configuration of a real-time data transmission in accordance with the present invention is schematically illustrated in the block diagram of Fig. 1. The transmission system is preferably part of an information and entertainment system adapted to transmit video and/or audio data from a data source 1 to a data receiver 3. The data source may provide video and/or audio data from a CD, a DVD, a (car) radio, a cell phone, a car navigation system, an Internet access device etc. The receiver 3 is adapted to reproduce the received data, preferably on a display or by means of loudspeakers.

The data source 1 supplies the data to be transmitted to interface 4 which adapts the data for transmission over the communication link 2 in accordance with the present invention. The data processed by interface 4 are supplied to bus transceiver 5 which inserts the data on the communication link 2. The interface 4 and the bus transceiver 5 need not to be separate devices. The functionality of each of which may be included into interface 4 or bus transceiver 5.

The communication link 2 is preferably a MOST network connecting the different devices connected thereto in a sequential manner.

A receiving unit also comprises a bus transceiver 6 for establishing connection to the communication link 2. The received data are supplied to an interface 7 for reconstructing the continuous data stream sent from a transmitter. Again, the interface 7 and the bus transceiver 6 may be incorporated into a single unit as already described in connection with interface 4 and bus transceiver 5 of the transmitter. The reconstructed data are then supplied to data receiver 3 to be further processed.

As indicated by the broken lines, the transmission system comprises an inner synchronization scheme of the MOST network and an outer synchronization scheme for synchronizing the receiver's clock to the source clock. The data to be transmitted are transferred over the communication link 2 based on the fixed synchronization scheme between bus transceiver 5 and bus transceiver 6. A resynchronization of the transmitted data is achieved in the receiver interface 7 based on time stamps inserted into the transmitted stream of data on the transmission side.

For transmitting a continuous stream of data from a transmitting site to a receiving site, the continuous stream is first divided into a plurality of data packets 11. These data packets are inserted on communication link 2. In a receiver, the data packets are received from the communication link 2 and reconstructed in order to output a continuous stream of data which corresponds to the original stream of data.

The present invention aims to facilitate the data transmission in form of data packets 11 by providing a control scheme which enables a accurate reconstruction of the original continuous data stream 10 and re-synchronization to the transmitter's clock.

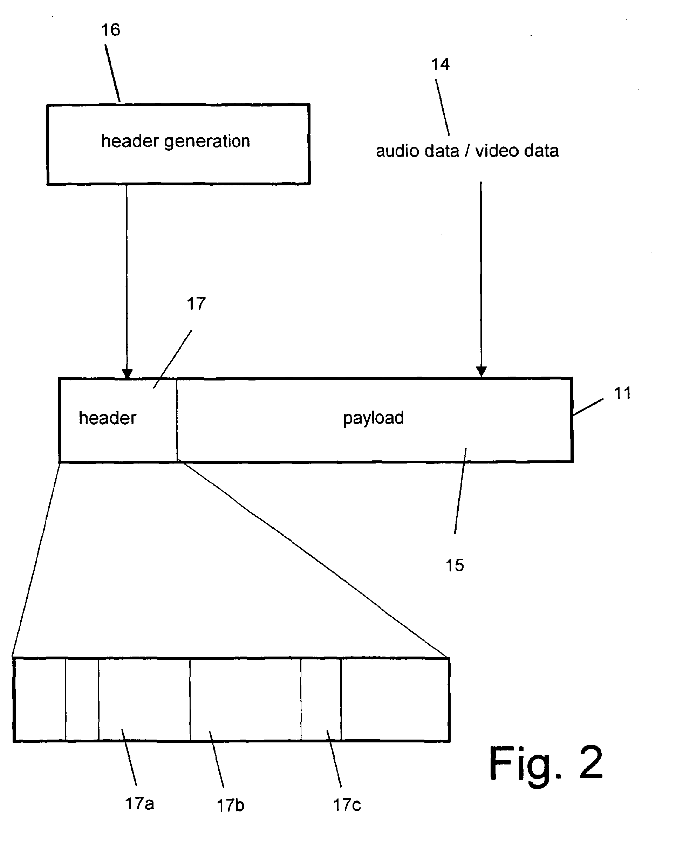

The configuration of such data packets 11 is illustrated in Fig. 2. Each data packet comprises a header portion 17 and a data or payload portion 15. The payload portion 15 contains only audio and/or video data to be reproduced by a receiver. The header portion 17 contains control information needed for the multimedia network control and in particular for reliable packet transmission. Further, the header portion 17 includes a number of portions 17a, 17b, 17c including auxiliary information relating to the data of the payload area 15. These data are separated from the received continuous stream of data 10 and inserted into the header portion 17 by header generation unit 16. At the receiver side, these auxiliary data which are needed for the reproduction of the audio/video data are again inserted into the reconstructed data stream or are used for its reconstruction.

To accomplish a separation of audio/video data and their auxiliary data, the interfaces 4,7 on the receiver and transmitter side are adapted to process a plurality of user data formats, for instance, video data in accordance with the MPEG format or audio data in accordance with the formats PCM, MP3, WMA, AC3 etc. Based on the predefined positions or indications for user data and auxiliary data within the different types of data streams, a reliable separation can be accomplished.

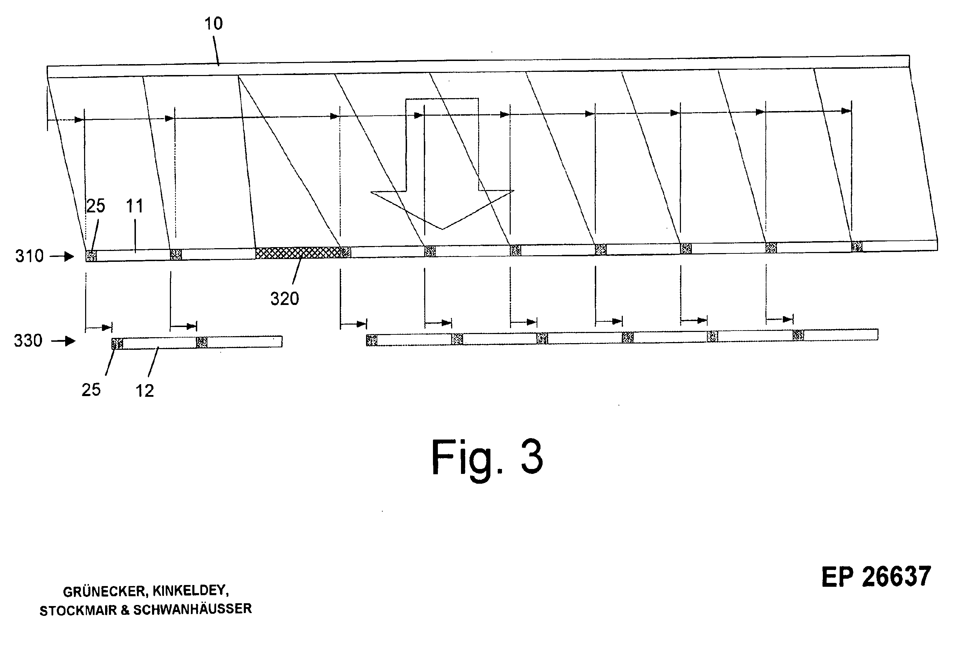

Fig. 3 schematically illustrates the principle of the multimedia system of the present invention. The original stream of data 10 is divided into a plurality of data packets 11. Each of the data packets 11 includes synchronization information 25 indicating the individual position of a data packet 11 within the transmitted stream of data 310. The synchronization information 25, in particular in form of time stamps, continuously transmits the transmitter's current clock to the receiving node. Any kind of appropriate pointers may be used for this purpose, for instance a count value, time data, or any other kind of data.

The data packets 11 are inserted on the communication link 2 as a stream of data 310 and transmitted to the respective receiver which is indicated within the control information of each data packet.

The received data packets 12 of a particular receiver are processed to form a data stream 330 to be output to a reproducing device. This is accomplished by the extracted synchronization information 25 which is employed for reconstructing the transmitter's clock at the receiving side. Consequently, the original stream of data 10 can be reliably reconstructed and synchronized.

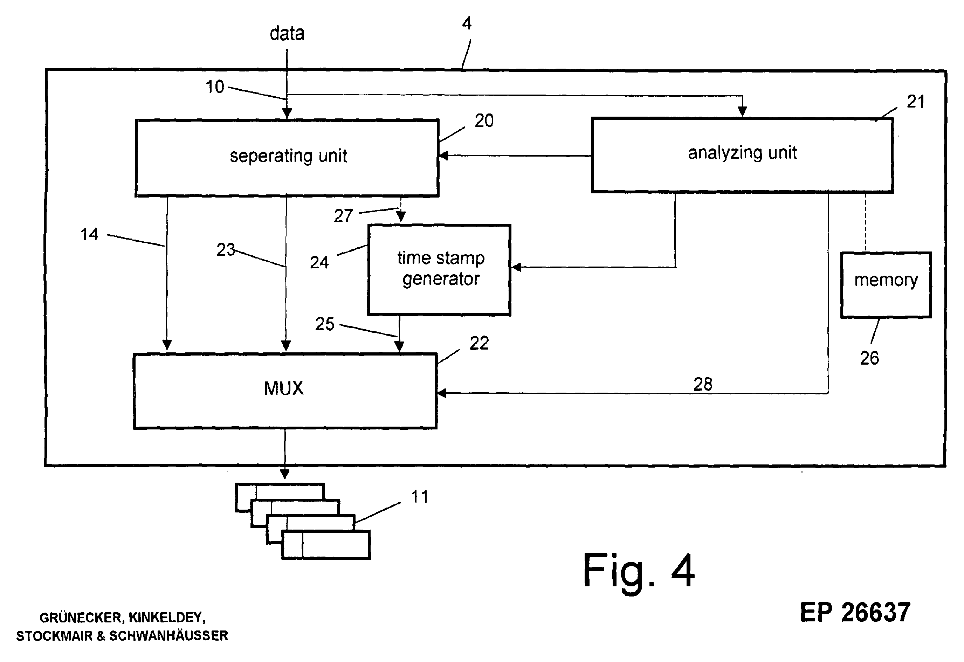

An exemplary embodiment of an interface 4 for processing the continuous data stream for insertion on the communication link 2 is illustrated in schematic form in Fig. 4. The data to be transmitted are not restricted to a particular data format, but different kinds of data such as compressed or uncompressed data are transmitted in an efficient manner. The data stream may, for instance, consist of PCM data having its own PCM clock. The same interface 4 also automatically adapts to compressed data formats already including their own synchronization information.

The received stream of continuous data is first supplied to a separating unit 20. The separating unit analyzes the individual data and identifies the kind of data to be transmitted.

The received stream of continuous audio and/ or video data 10 is first supplied to separating unit 20 and analyzing unit 21. Analyzing unit 21 analyzes the received data and identifies the kind of data to be transmitted. In particular, the data format is determined. The data format includes at least one of the following: the type of compression (or not compressed), the type of packeting (e.g. program stream, transport stream, no packeting) data rate etc.

Depending on the identification result, the appropriate approach for providing synchronization information for the new synchronization scheme is selected. Specifically, it is determined whether or not available synchronization information from the data stream 10 can be retrieved and appropriately incorporated into the data transmitted on the communication link 2.

The determination procedure can be performed based on data format properties which are stored in advance in a memory (26) connected to the analyzing unit 21. The appropriate processing information is stored in association therewith.

Memory 26 is preferably a non-volatile re-writable memory for storing the information on which the analysis performed by analyzing unit 21 is based. According to a preferred embodiment, the information on which an analysis is based is stored in the form of look-up-table data. In accordance with format and/or synchronization details of the data stream, processing information indicates on how to process the data by transmitter 4. In particular, the look-up-table indicates the conditions on which particular kinds of synchronization information 25 is generated.

It is a particular advantage of such a memory that the synchronization information can be updated in a simple manner. The separate memory 26 supplies its content to analyzing unit 21. By individually updating the memory content, the analysis can be enhanced or adapted. In particular, new types of data to be handled, for instance new compression standards or packet formats, can be updated in a simple manner.

The separating unit individually provides audio and/or video data 14 which are free from any auxiliary information. The auxiliary information 23 is output separately. In case the received data 10 does not include any auxiliary information, analyzing unit 21 preferably analyzes the received data stream 10 to extract particular parameters thereof. Generally, the analyzing unit 21 will analyze the received data based on audio and/or video formats which are known to the system in advance from look-up-table data stored in memory 26. Depending on the detected format of the data, the audio and/or video sample values are separated from the auxiliary information, and the type of synchronization information to be generated is determined.

The memory 26 is adapted in advance to enable analyzing unit 21 to analyze and identify any of the relevant data formats such as transmission formats like MPEG (PS - Program Stream, TS - Transport Stream), interface formats like S/PDIF (Sony/Phillips Digital Interface - a standard audio transfer format) or 12S, and data type formats like PCM, MP3, WMA, AC3, DTS or MLP.

According to a preferred embodiment, separating unit 20 extracts existing time stamps or any kind of clock reference information - if available - from the received data stream for further use in the multimedia system of the present invention. The extraction operation is automatically initiated upon detection of a data format comprising such synchronization information.

The received data 10 may also be converted into a particular data format different from the received data format before transmission. The received data format will then be transmitted as auxiliary information in the header portion 17 of a data packet 11 in order to enable reconstruction and/or further processing of the received data format on the receiver side.

Multiplexer 22 combines the audio and/or video data 14 with header information 17 containing the auxiliary information 23, time stamps 25 and additional control information needed for the multimedia network control (not shown). The time stamps 25 are received from a time stamp generator 24. Generator 24 provides clock reference information enabling a resynchronization of the transmitted data on the receiver side in accordance with control information received from analyzing unit 21.

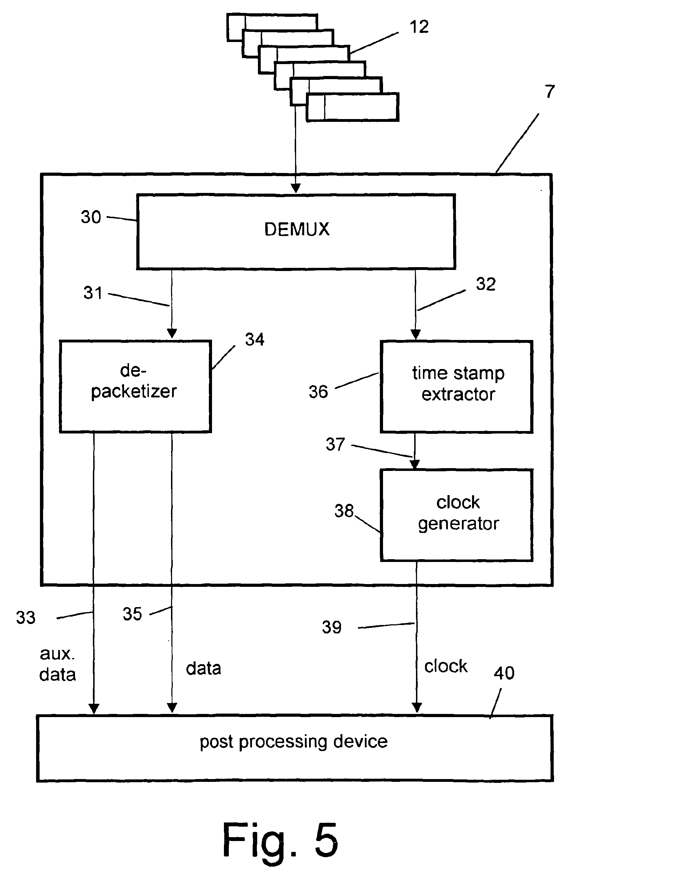

According to a preferred embodiment, time stamp generator 24 produces time data or count values as reference clock information 25. These data may be generated based on an internal clock or by a clock received from an external device. According to another embodiment, the reference clock information 27, in particular the time stamps, which are extracted from the continuous input data stream 10, are used for this purpose. A more detailed explanation of time stamp generator 24 will be given below in connection with Fig. 5.

Multiplexer 22 receives the separate information from the respective sources and combines same in order to provide the individual data packets 11 for transmission on communication link 2.

A corresponding receiving interface 7 is illustrated schematically in Fig. 5. The data packets 12 received from the communication link 2 are supplied to a demultiplexer 30. Demultiplexer 30 separates the different kinds of information 31, 32 from the data packets 12 and supplies same separately. Specifically, demultiplexer 30 extracts the audio and/or video data 31 (including auxiliary information) and time stamps 32. Depacketizer 34 generates a continuous stream of audio and/or video data 35 from the received user data packets 31 and further extracts the auxiliary information 33 from the received data packets 31.

Time stamp extractor 36 extracts the synchronization information from the received data packets 12 and applies the extracted synchronization information 37 to clock generator 38. Clock generator 38 generates a new clock 39 based on the received synchronization information 37.

The audio and/or video data 35, the auxiliary information 33 and the new clock are applied to a post processing device 40 for further processing the received data. Post-processing device 40 may, for instance, decode the received audio and/or video data for reproduction purposes. The post-processing (in particular a decoding processing) is simplified by the auxiliary data 33. Based on the data properties included in the auxiliary data 33, any time consuming detection operation and a provision of the processing capacity required therefore on the receiver's side can be avoided.

In case the user data have been converted to a common data format, the extracted user data 31 are reconverted in a data converter which replaces or is included in de-packetizer 34 to the original data format 35 based on format information transmitted within the auxiliary data 33.

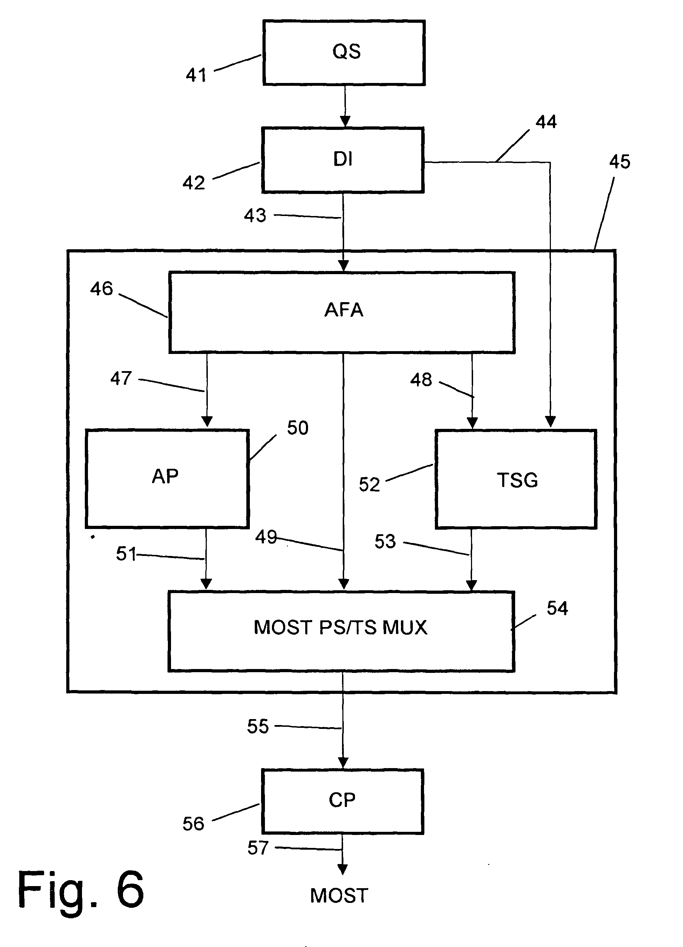

A more detailed configuration of a transmitting interface 45 is described in connection with Fig. 6. The data to be transmitted stem from a data source 41. A data source 41 may be a data storage device like a CD or a DVD or access to a data network or broadcasting network giving access to the Internet or radio network.

The reproduced/received data is supplied to processing unit 42. Processing unit 42 is adapted to process the received data in order to transmit processed data 43 to a remote device. The processing unit 42 can be a CD or DVD player, a DVB receiver, a car navigation system, a cell phone, car radio etc. The output data 43 will generally be in compliance with a standardized data format such as transmission formats like MPEG (PS - Program Stream, TS - Transport Stream), interface formats like S/PDIF (Sony/Phillips Digital Interface - a standard audio transfer format) or 12S, and data type formats like PCM, MP3, WMA, AC3, DTS or MLP.

Data 43 are output from processing unit 42 to the transmitting interface 45 in order to be transmitted to a remote device on the communication link.

The data to be transmitted are first supplied to an audio format adapting device AFA 46 which basically corresponds to separating unit 20 and analyzing unit of Fig. 4. The AFA unit 46 analyses the received data stream 43 in order to determine the data format. The extracted audio and/or video data 47 are forwarded to packetizer 50. The additional auxiliary information included in the received data 43 is separated therefrom based on the detected data format and forwarded to MOST multiplexer 54.

The analysis result with respect to synchronization information available for the received stream of data 43 is mainly based on the identified data transmission format. Depending on the detection result, AFA unit 46 either extracts synchronization information 48 from the received stream of data 43 for use as reference clock information for insertion into the transmitted data packets or generates this information on its own. In addition, an external clock reference signal 44 is applied to time stamp generator 52 for generating or adapting the synchronization information 48, 53.

The stream of audio or video data 47 is supplied to packetizer 50 for dividing the continuous stream of data into data packets of a predefined size. The resulting data packets are supplied to MOST multiplexer 54.

According to an alternative embodiment, packetizer 50 and MOST multiplexer 54 may be integrated into a single processing unit. According to a further preferred embodiment, time stamp generator 52 may also be integrated with the MOST multiplexer 54.

Multiplexer 54 adds the header portion to the data packets 51 received from packetizer 50. The data portion contains control information mandatory for the packet handling on communication link 2, auxiliary information 49 extracted from the original data stream 43 and reference clock information 53. The data packets 55 are output to the communication link preferably being a MOST network.

Alternatively, the data packets are passing through an encrypting unit 56 before being inserted on the communication link. Encrypting of the data packets prevents unauthorized access to the data transmitted over the communication link.

According to another preferred embodiment, the encrypting unit is incorporated into the transmitter interface 45 in order to encrypt the data output from packetizer 50.

In a corresponding manner, the data are decrypted on the receiving side. The decrypting unit will be provided ahead of the receiver interface 7 or being incorporated therein.

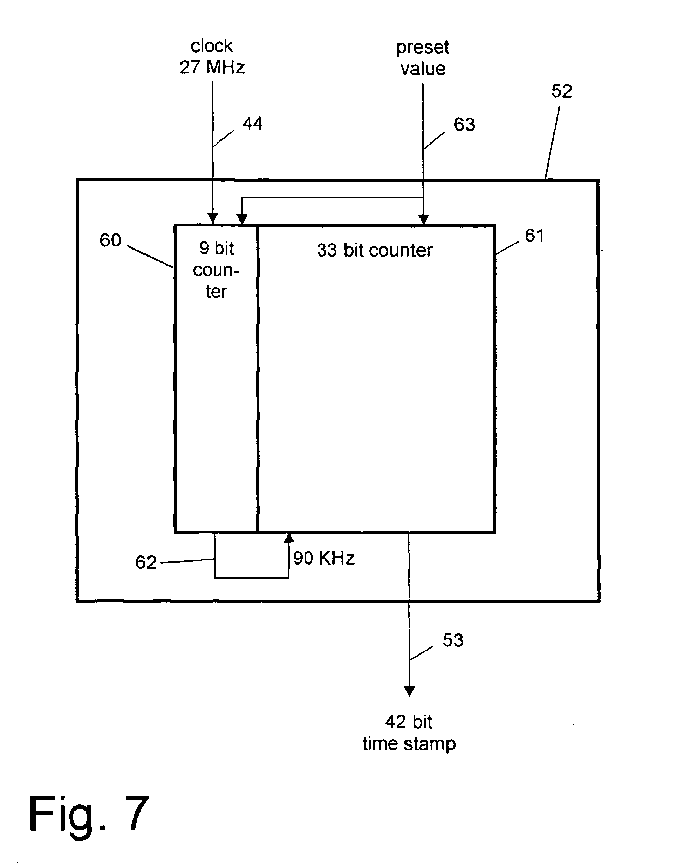

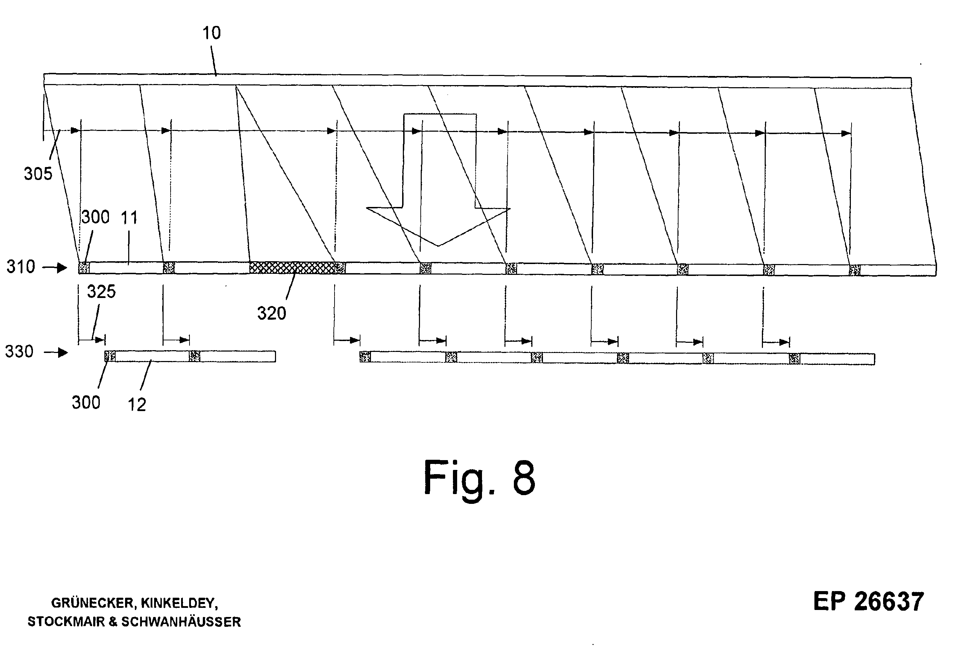

A particular implementation of time stamp generator 52 of Fig. 6 or time stamp generator 24 of Fig. 4 is show in Fig. 7 and will be described in more detail by referring to Figures 8 to 10.

Figures 8 to 10 illustrate different approaches for generating and employing synchronization information when transmitting a stream of continuous audio and/or video data 10. The approaches differ by the manner on how new synchronization information 25 is generated. The different approaches are selected based on the data format of the continuous stream of audio and/or video data 10 to be transmitted and the availability of a corresponding clock signal.

A first approach is described in connection with Fig. 8. The illustrated approach is applicable for transmitting predefined data formats which do not have reference clock information incorporated therein. For instance, the elementary stream or packetized elementary stream of the MPEG standard do not include such reference clock information. The elementary stream is the most basic component of an MPEG bit stream. Each elementary stream contains a single type of (usually compressed) data. Each elementary steam is formed into a stream of packetized elementary stream packets. A packetized elementary stream packet may have fixed or variable size blocks.

Such data streams not having synchronization information are further provided over interfaces like 12S and S/PDIF.

When transmitting the received stream of audio and/or video data 10 in form of data packets 11, each packet 11 is provided with synchronization information 25. The synchronization information is in the form of time stamps 300 inserted therein, preferably into the header portion. When packeting the data based on the received continuous stream of data 10, the transfer rate of the communication link 2 generally exceeds the data rate required for the continuous stream of data 10. Thus, the transmission of data packets requires from time to time to insert stuffing packets not including any data in order to adapt the communication link's data rate to that required for the transmission of the continuous stream of data 10. Such stuffing packets are indicated by reference numeral 320 in Fig. 8.

The time stamp values for each of the time stamps 300 are calculated based on the clock signal of the continuous stream of data 10. For instance, an audio data stream to be transmitted may be based on a system clock of 27MHz. Based on this clock signal, a time stamp counter calculates time stamp values to be inserted into the stream of data 310 to be transmitted.

Time stamp generator 52 as shown in Fig. 7 is a particular implementation for generating a 42 bit time stamp value. The time stamp generator comprises a cascaded counter configuration consisting of a 9 bit counter 60 and a 33 bit counter 61. The first counter 60, the 9 bit counter, up-counts a count value in accordance with the supplied clock signal 44, for instance the 27MHz clock of an audio data stream.

Each time the 9 bit counter 60 arrives at a predetermined count value, a carry signal 62 is issued and applied to the second 33 bit counter 61. The predefined count value may be set to 300 for producing a carry over 62 to the second counter 61 when having a frequency of 90kHz upon having received an input clock frequency of 27MHz. Each time the first counter 61 arrives at the predefined count value, the first counter 60 will be reset. The count results of the first counter 60 and of the second counter 61 are combined in order to form a 42 bit time stamp value 53 for insertion into the data packets 11.

The transmitter as well as the receiver require a constant processing delays 305, 325 when processing the continuous stream of data. While the generation of time stamp values 300 for the data stream 310 take into account the individual packet position, in particular offsets resulting from stuffing packets, the constant processing delay of the receiver enables a simple extraction of the received data packet 12 each having a correct position for its time stamp value 300.

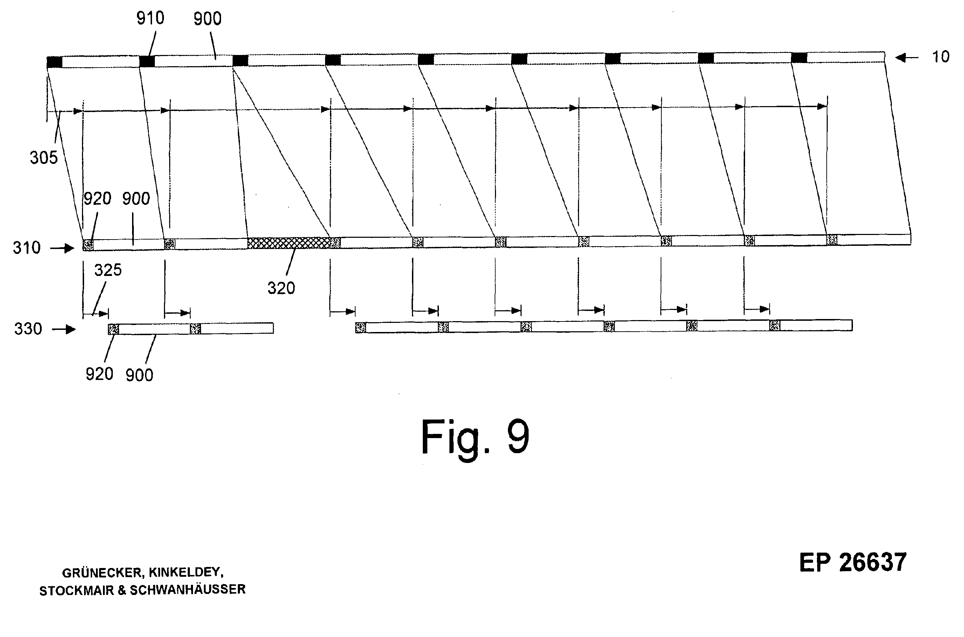

While the previously described approach is well suited for data streams not having time stamp information included therein in case a system clock reference signal is available, the approach illustrated in Fig. 9 is to be employed in case the stream of continuous audio and/or video data 10 already has time stamps 910 included therein. Such streams of data may, for instance, be provided from optical disk players providing a data stream having time stamps within the program stream.

Upon detection of a data format having time stamps 910 already included therein, the time stamps are subject to a "restamping" in order to adapt the time stamp value to the packet position 900 within the stream of data 310 to be transmitted. For this purpose, the time stamp values 910 are extracted from the stream of data 10 and corrected in accordance with the insertion position of a data packet 900.

The correction procedure for transforming available time stamp values 910 into corrected time stamp values 920 will now be explained with reference to Fig. 7. In contrast to the previously described approach, time stamp generator 52 starts a counting procedure from a preset value 63. The preset value 63 corresponds to the obtained time stamp 910 from the continuous stream of data 10. In accordance with the system clock 44 received together with the continuous stream of data 10, the count value is up-counted. Thus, the existing time stamp values 910 can be corrected in accordance with the insertion position within the stream of data 310 transmitted on communication link 2.

Again, constant processing delays 305, 325 enable a simple reconstruction of output stream 330 while each packet 900 has a position corresponding to its time stamp value 920.

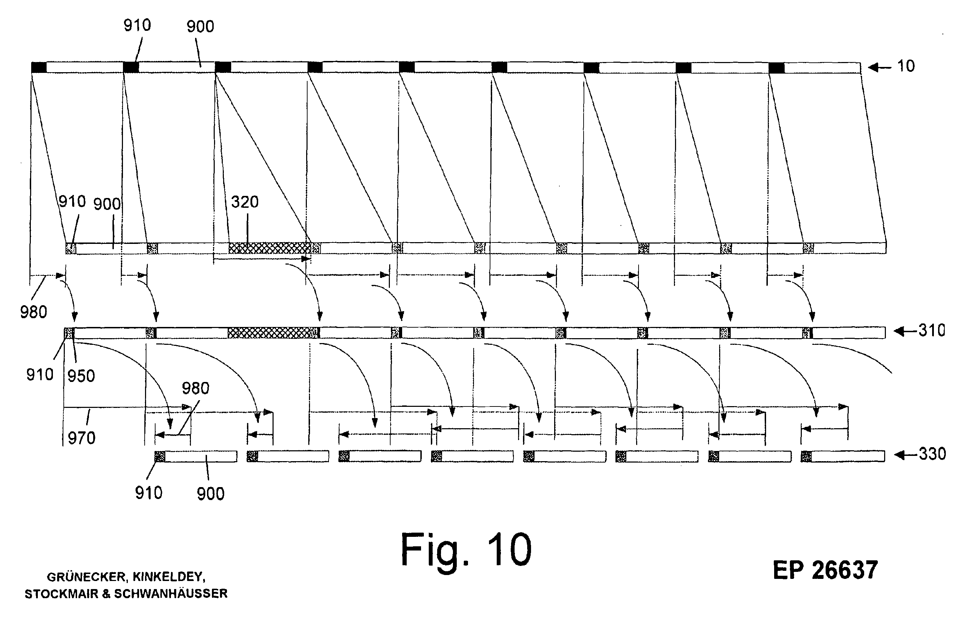

While Fig. 9 illustrates a time stamp generation approach for a continuous stream of data having time stamps included therein and being additionally accompanied by a system clock signal, the approach illustrated in Fig. 10 does not provide an additional system clock reference 44. For instance, DVB signals provide time stamp values but are not accompanied by a system clock reference. Thus, the approach as shown in Fig. 9 is not applicable.

In contrast to the previously described approach, existing time stamp values 910 are maintained and neither replaced nor amended for transmission to a receiver. In order to adapt the synchronization information of each data packet 900 within the stream of transmitted data 310, correction values 950 are generated and inserted as supplementary information for the existing synchronization information 910. The determination of the correction values 980 is based on the transmitter's clock.

Synchronization information 950 corrects the offset of each data packet 900 with respect to time compared to its original position. The offset value 980 is reflected by correction value 950 and inserted into the data packet 900, preferably into its header portion.

At the receiver side, the position of each received data packet 900 is first determined and adjusted based on the correction value 950. This may be accomplished by applying a constant delay 970 (preferably a constant memory delay) to each received data packet and to extract the individual data packet 900 therefrom in accordance with the individual offset value 980 obtained from the correction value 950. Thus, the offset 980 reflected by correction value 950 is cancelled. It is to be noted that the constant delay value 970 for buffering all received data packets has to be a constant value exceeding the maximum time shift 980.

Such an approach avoids the need of a synchronized transmission and enables the use of a packetized transmission mechanism for an isynchronous transmission of data, in particular for real time applications of audio and/or video data. In order to appropriately adapt the synchronization scheme to the data format, available synchronization information within the data is identified and reused for efficient transmission and resynchronization purposes. Thus, a transparent and efficient transmission of data is achieved over a packet-based transmission network.

In summary, the present invention enables the transmission and resynchronization of any kind of data transmitted on a communication link of a predefined transmission clock. The different options of available synchronization information is analyzed and based on the results thereof, an appropriate synchronization scheme is selected.

## Claims

1. A method for transmitting a stream of continuous audio and/or video data (10) from a transmitter to a receiver on a communication link (2) wherein said communication link (2) transmitting data in synchronization with a first clock signal, comprising the steps of
analyzing said stream of continuous audio and/or video data (10) and determining the type of synchronization information available wherein said audio and/or video data (10) is analyzed based on information provided separately in form of look-up-table data in a memory (26), said information including data format properties stored in association with appropriate processing information, and
generating new synchronization information (25) in accordance with the result of the analysis for insertion into said stream of continuous audio and/or video data (10),
inserting said generated synchronization information (25) into said stream of continuous audio and/or video data (10) to be transmitted, and
transmitting said stream of continuous audio and/or video data together with said new synchronization information (25).

2. A method according to claim 1, wherein said memory is a nonvolatile re-writeable memory (26).

3. A method according to claim 1 or 2, wherein said step of determining the type synchronization information determines whether or not said stream of continuous audio and/or video data (10) contains time stamps (910).

4. A method according to claim 3, wherein said step of generating new synchronization information generates new time stamps (300) to be inserted into said stream of continuous audio and/or video data (10) if it has been determined that said stream of continuous audio and/or video data (10) does not contain time stamps (910).

5. A method according to claim 4, wherein said new time stamps (300) are generated based on the insertion position into the stream of data (310) to be transmitted and based on a second clock (44), said second clock (44) being a clock of said stream of continuous audio and/or video data (10).

6. A method according to claim 3, wherein said step of generating new synchronization information corrects the values of available time stamps (910) obtained from said stream of continuous audio and/or video data (10) if it has been determined that said stream of continuous audio and/or video data (10) contains time stamps (910).

7. A method according to claim 6, wherein said available time stamps (910) are corrected based on the insertion position into the stream of data (310) to be transmitted and based on a second clock (44), and said second clock (44) is a clock of said stream of continuous audio and/or video data (10).

8. A method according to claim 3, wherein said step of generating new synchronization information maintains each available time stamp (910) and additionally generates a correction value (950) for each existing time stamp (910) if it has been determined that said stream of continuous audio and/or video data (10) contains time stamps (910).

9. A method according to claim 8, wherein said step of determining the type of synchronization information further determines whether or not a clock (44) of said stream of continuous audio and/or video data (10) is available, and said correction values (950) are generated if it has been determined that there is no such clock available.

10. A method according to claim 8 or 9, wherein said correction values (950) are generated based on said first clock.

11. A method according to claim 5 or 7, wherein said second clock signal (44) is received from a processing unit (42) providing the continuous stream of audio and/or video data (43).

12. A method according to any of claims 5 to 11, wherein said step of generating new synchronization information (25) up-counts a count value based on said first clock signal or said second clock signal (44).

13. A method according to any of claims 1 to 12, wherein said analyzing step comprising the step of identifying the data format of said data of said continuous stream of audio and/or video data (10).

14. A method according to any of claims 3 to 13, wherein said continuous stream of audio and/or video data (10) is in a format in accordance with the MPEG international standard and said time stamps (910) are MPEG reference time stamps.

15. A method according to claim 14, wherein said MPEG reference time stamps are retrieved from the transport stream syntax, the program stream syntax or packetised elementary stream syntax of the continuous stream of audio and/or video data (10).

16. A method according to claim 14 or 15, wherein said continuous stream of audio and/or video data (10) is in a transport stream format in accordance with the MPEG international standard and said existing time stamps are the program clock reference time stamps of the transport stream.

17. A method according to claim 14 or 15, wherein said continuous stream of audio and/or video data (10) is in a program stream format in accordance with the MPEG international standard and said time stamps are the system clock reference time stamps of the program stream.

18. A method according to claim 14 or 15, wherein said continuous stream of audio and/or video data (10) is in a packetised elementary stream format in accordance with the MPEG international standard and said time stamps are the elementary stream clock reference time stamps of the packetised elementary stream.

19. A method according to any of claims 1 to 18, further comprising the steps of:
determining whether or not the received continuous stream of audio and/or video data (10) includes auxiliary information (23) describing properties of the data to be transmitted,
obtaining said auxiliary information (23) from said continuous stream of audio and/or video data (10) if it has been determined that auxiliary information (23) is included in the continuous stream of audio and/or video data (10),
analyzing the continuous stream of data (10) and generating said auxiliary information based on the results thereof if it has been determined that auxiliary information (23) is not included in said continuous stream of audio and/or video data (10), and
inserting the auxiliary information into the data (11) to be transmitted.

20. A method according to claim 19, wherein said determination of included auxiliary information is based on separately provided information.

21. A method according to claim 20, wherein said separately provided information is stored in form of look-up-table data.

22. A method according to claim 20 or 21, wherein separately provided information is stored in a nonvolatile re-writeable memory (26).

23. A method according to any of claims 19 to 22, wherein said auxiliary information relates to information needed by a post processing device (40).

24. A method according to claim 19 or 23, wherein said auxiliary information identifies encoding parameters of the audio and/or video data of the stream of audio and/or video data (10) to be transmitted.

25. A method according to any of claims 1 to 24, further comprising the step of forming data packets (11) from the continuous stream of audio and/or video data (10) for transmission on said communication link (2).

26. A method according to claim 25, wherein each of the data packets (11) comprises a payload portion (15) for receiving the data of said continuous stream of audio and/or video data (10) and a header portion (17) receiving control information, said synchronization information (25) being inserted into said header portion (17).

27. A method according to claim 26, further comprising the step of inserting the auxiliary information into the header portion (17) of each data packet (11).

28. A method according to any of claims 1 to 27, wherein said communication link (2) is a vehicle multimedia bus.

29. A method according to claim 28, wherein said vehicle multimedia bus is configured in accordance with the international MOST standard.

30. A transmitter for transmitting a stream of continuous audio and/or video data (10) to a receiver on a communication link (2) wherein said communication link (2) transmitting data in synchronization with a first clock signal, comprising:
a time stamp generator (24) for generating synchronization information (25), and
a multiplexer unit (22) for inserting the generated synchronization information (25) into said stream of continuous audio and/or video data to be transmitted and for transmitting said stream of continuous audio and/or video data together with said inserted synchronization information (25)
**characterized by**
a memory (26) for storing look-up-table data
an analyzing unit (21) for analyzing the stream of continuous audio and/or video data (10) and determining the type of synchronization information (25) available, wherein said audio and/or video data (10) is analyzed based on information provided separately in form of look-up-table data in said memory (26) said information including data format properties stored in association with appropriate processing information, wherein
said time stamp generator (24) is adapted to generate synchronization information (25) in accordance with the result of the analysis.

31. A transmitter according to claim 30, wherein said memory is a nonvolatile re-writeable memory (26) for storing said separately provided information for the data analysis.

32. A transmitter according to claim 30 or 31, wherein said analyzing unit (21) is adapted to determine whether or not said stream of continuous audio and/or video data (10) contains time stamps (910).

33. A transmitter according to claim 32, wherein said time stamp generator (24) is adapted to generate new time stamps (300) to be inserted into said stream of continuous audio and/or video data (10) if it has been determined that said stream of continuous audio and/or video data (10) does not contain time stamps (910).

34. A transmitter according to claim 33, wherein said time stamp generator (24) is adapted to generate said new time stamps (300) based on the insertion position into the transmitted stream of data (310) and based on a second clock (44), said second clock (44) being a clock of said stream of continuous audio and/or video data (10).

35. A transmitter according to claim 32, wherein said time stamp generator (24) is adapted to generate new synchronization information (25) by correcting the values of time stamps (910) available from said stream of continuous audio and/or video data (10) if it has been determined that said stream of continuous audio and/or video data (10) contains time stamps (910).

36. A transmitter according to claim 35, wherein said time stamp generator (24) is adapted to correct said available time stamps (910) based on the insertion position into the transmitted stream of data (310) and based on a second clock (44), said second clock (44) being a clock of said stream of continuous audio and/or video data (10).

37. A transmitter according to claim 32, wherein said time stamp generator (24) is adapted to maintain each available time stamp (910) and additionally to generate a correction value (950) for each of the available time stamps (910) if it has been determined that said stream of continuous audio and/or video data (10) contains time stamps (910).

38. A transmitter according to claim 37, wherein
said analyzing unit (21) is further adapted to determine whether or not a clock (44) of said stream of continuous audio and/or video data (10) being available, and said time stamp generator (24) is adapted to generate said correction values (950) if it has been determined that there is no clock (44) available from said stream of continuous audio and/or video data (10).

39. A transmitter according to claim 37 or 38, wherein said time stamp generator (24) is adapted to generate said correction values (950) based on said first clock.

40. A transmitter according to any of claims 34 to 39, wherein said time stamp generator (24) is adapted to generate said new synchronization information (25) by up-counting a count value based on said first clock signal or said second clock signal (44).

41. A transmitter according to any of claims 30 to 40, wherein said analyzing unit (21) is adapted to identify the data format of said data of said continuous stream of audio and/or video data (10).

42. A transmitter according to any of claims 35 to 41, wherein said continuous stream of audio and/or video data (10) is in a format in accordance with the MPEG international standard and said time stamps (910) are MPEG reference time stamps.

43. A transmitter according to claim 42, wherein said time stamp generator (24) is adapted to obtain said MPEG reference time stamps from the transport stream syntax, the program stream syntax or packetised elementary stream syntax of the continuous stream of audio and/or video data (10).

44. A transmitter according to claim 42 or 43, wherein said continuous stream of audio and/or video data (10) is in a transport stream format in accordance with the MPEG international standard and said time stamps are the program clock reference time stamps of the transport stream.

45. A transmitter according to claim 42 or 43, wherein said continuous stream of audio and/or video data (10) is in a program stream format in accordance with the MPEG international standard and said time stamps are the system clock reference time stamps of the program stream.

46. A transmitter according to claim 42 or 43, wherein said continuous stream of audio and/or video data (10) is in a packetised elementary stream format in accordance with the MPEG international standard and said existing time stamps are the elementary stream clock reference time stamps of the packetised elementary stream.

47. A transmitter according to any of claims 32 to 46, wherein said analyzing unit (21) is further adapted to determine whether or not the received continuous stream of audio and/or video data (10) includes auxiliary information (23) describing properties of the data to be transmitted, to obtain said auxiliary information (23) from said continuous stream of audio and/or video data (10) if it has been determined that auxiliary information (23) is included in the continuous stream of audio and/or video data (10), to analyze the continuous stream of data (10) and to generate said auxiliary information (23) based on the results of the analysis if it has been determined that auxiliary information (23) is not included in said continuous stream of audio and/or video data (10), and to supply the auxiliary information (28) to said multiplexer (22) for insertion into said data to be transmitted.

48. A transmitter according to claim 47, wherein said determination of included auxiliary information is based on separately provided information.

49. A transmitter according to claim 48, wherein said separately provided information is stored in form of look-up-table data.

50. A transmitter according to claim 48 or 49, wherein separately provided information is stored in a nonvolatile re-writeable memory (26).

51. A transmitter according to any of claims 47 to 50, wherein said auxiliary information (23) relates to information needed by a post processing device (40).

52. A transmitter according to any of claims 47 to 50, wherein said auxiliary information (23) identifies encoding parameters of the audio and/or video data of the stream of audio and/or video data (10) to be transmitted.

53. A transmitter according to any of claims 32 to 49, wherein said multiplexer (22) being further adapted to form data packets (11) from the continuous stream of audio and/or video data (10) for transmission on said communication link (2).

54. A transmitter according to claim 53, wherein each of the data packets (11) comprises a payload portion (15) for receiving the data of said continuous stream of audio and/or video data (10) and a header portion (17) receiving control information, said synchronization information (25) being inserted into said header portion (17).

55. A transmitter according to claim 54, wherein said multiplexer (22) being further adapted to insert the auxiliary information into the header portion (17) of each data packet (11).

56. A transmitter according to any of claims 30 to 55, wherein said communication link (2) is a vehicle multimedia bus.

57. A transmitter according to claim 56, wherein said vehicle multimedia bus is configured in accordance with the international MOST standard.

58. A vehicle information and entertainment system for transmitting a stream of continuous audio and/or video data (10) from a transmitter to a receiver on a communication link (2) being adapted to transmit data in synchronization with a first clock signal, said vehicle information and entertainment system comprises a transmitter (4) for transmitting said continuous stream of data (10) on said communication link (2), and a receiver (7) for receiving a continuous stream of data (310) from said communication link (2), said transmitter (4) being in accordance with any of claims 30 to 57.

59. A vehicle information and entertainment system according to claim 58, wherein said receiver (7) is adapted to receive the transmitted data (310) together with said synchronization information (25) from said communication link (2), to extract the synchronization information (25) from said received data (310), to recover a clock signal (39) based on the extracted synchronization information (25), to reconstruct a continuous stream of data (330) based on the received data (310) and the recovered clock signal (39), and to output the reconstructed stream of data (330) together with the recovered clock signal (39).

60. A vehicle information and entertainment system according to claim 59, wherein said receiver (7) is adapted to extract time stamps (910) and correction values (950) as said synchronization information (25).

61. A vehicle information and entertainment system according to claim 60, wherein said receiver (7) is further adapted to analyze the received stream of data (310) for determining whether the received synchronization information including a correction value (950) and to reconstruct the stream of data (330) accordingly.

62. A vehicle information and entertainment system according to claim 60 or 61 wherein each correction value (950) indicates an offset (980) of an individual data packet (900) of the received stream of data (945) with respect to time.

63. A vehicle information and entertainment system according to claim 62 wherein an individual position of each received data packet (900) within the data stream (330) is determined based on said offset (980) indicated by a correction value (950).

64. A vehicle information and entertainment system according to claim 63 wherein said clock signal (39) is recovered based on said time stamps (910) of said reconstructed data stream (330).

## Patentansprüche

1. Verfahren zum Senden eines Stroms kontinuierlicher Audio- und/oder Videodaten (10) von einem Sender zu einem Empfänger über eine Kommunikationsverbindung (2), wobei die Kommunikationsverbindung (2) Daten synchron zu einem ersten Taktsignal sendet, und wobei es die folgenden Schritte umfasst:
Analysieren des Stroms kontinuierlicher Audio- und/oder Videodaten (10) und Bestimmen des Typs verfügbarer Synchronisationsinformationen, wobei die Audio- und/oder Videodaten (10) auf Basis von Informationen analysiert werden, die separat in Form von Verweistabellen-Daten in einem Speicher (26) vorhanden sind, und die Informationen Datenformat-Eigenschaften einschließen, die in Verbindung mit entsprechenden Verarbeitungsinformationen gespeichert sind, und
Erzeugen neuer Synchronisationsinformationen (25) gemäß dem Ergebnis der Analyse zum Einfügen in den Strom kontinuierlicher Audio- und/oder Videodaten (10),
Einfügen der erzeugten Synchronisationsinformationen (25) in den zu sendenden Strom kontinuierlicher Audio- und/oder Videodaten (10), und
Senden des Stroms kontinuierlicher Audio- und/oder Videodaten (10) zusammen mit den neuen Synchronisationsinformationen (25).

2. Verfahren nach Anspruch 1, wobei der Speicher ein nicht flüchtiger überschreibbarer Speicher (26) ist.

3. Verfahren nach Anspruch 1 oder 2, wobei der Schritt des Bestimmens des Typs von Synchronisationsinformationen bestimmt, ob der Strom kontinuierlicher Audio- und/oder Videodaten (10) Zeitstempel (910) enthält oder nicht.

4. Verfahren nach Anspruch 3, wobei der Schritt des Erzeugens neuer Synchronisationsinformationen neue Zeitstempel (300) erzeugt, die in den Strom kontinuierlicher Audio- und/oder Videodaten (10) einzufügen sind, wenn festgestellt worden ist, dass der Strom kontinuierlicher Audio- und/oder Videodaten (10) keine Zeitstempel (910) enthält.

5. Verfahren nach Anspruch 4, wobei die neuen Zeitstempel (300) auf Basis der Einfügeposition in den zu sendenden Strom von Daten (310) und auf Basis eines zweiten Taktes (44) erzeugt werden, wobei der zweite Takt (44) ein Takt des Stroms kontinuierlicher Audio- und/oder Videodaten (10) ist.

6. Verfahren nach Anspruch 3, wobei der Schritt des Erzeugens neuer Synchronisationsinformationen die Werte verfügbarer Zeitstempel (910) korrigiert, die aus dem Strom kontinuierlicher Audio- und/oder Videodaten (10) gewonnen worden sind, wenn festgestellt worden ist, dass der Strom kontinuierlicher Audio- und/oder Videodaten (10) Zeitstempel (910) enthält.

7. Verfahren nach Anspruch 6, wobei die verfügbaren Zeitstempel (910) auf Basis der Einfügeposition in den zu sendenden Strom von Daten (310) und auf Basis eines zweiten Taktes (44) korrigiert werden und der zweite Takt (44) ein Takt des Stroms kontinuierlicher Audio- und/oder Videodaten (10) ist.

8. Verfahren nach Anspruch 3, wobei der Schritt des Erzeugens neuer Synchronisationsinformationen jeden verfügbaren Zeitstempel (910) beibehält und zusätzlich einen Korrekturwert (950) für jeden vorhandenen Zeitstempel (910) erzeugt, wenn festgestellt worden ist, dass der Strom kontinuierlicher Audio-und/oder Videodaten (10) Zeitstempel (910) enthält.

9. Verfahren nach Anspruch 8, wobei der Schritt des Bestimmens des Typs von Synchronisationsinformationen des Weiteren feststellt, ob ein Takt (44) des Stroms kontinuierlicher Audio- und/oder Videodaten (10) verfügbar ist oder nicht, und die Korrekturwerte (950) erzeugt werden, wenn festgestellt worden ist, dass kein derartiger Takt verfügbar ist.

10. Verfahren nach Anspruch 8 oder 9, wobei die Korrekturwerte (950) auf Basis des ersten Taktes erzeugt werden.

11. Verfahren nach Anspruch 5 oder 7, wobei das zweite Taktsignal (44) von einer Verarbeitungseinheit (42) empfangen wird, die den kontinuierlichen Strom von Audio- und/oder Videodaten (43) bereitstellt.

12. Verfahren nach einem der Ansprüche 5 bis 11, wobei der Schritt des Erzeugens neuer Synchronisationsinformationen (25) einen Zählwert auf Basis des ersten Taktsignals oder des zweiten Taktsignals (44) aufwärts zählt.

13. Verfahren nach einem der Ansprüche 1 bis 12, wobei der Schritt des Analysierens den Schritt des Identifizierens des Datenformats der Daten des kontinuierlichen Stroms von Audio- und/oder Videodaten (10) umfasst.

14. Verfahren nach einem der Ansprüche 3 bis 13, wobei der kontinuierliche Strom von Audio- und/oder Videodaten (10) in einem Format vorliegt das dem internationalen MPEG-Standard entspricht, und die Zeitstempel (910) MPEG-Bezugszeitstempel sind.

15. Verfahren nach Anspruch 14, wobei die MPEG-Bezugs-Zeitstempel aus der Transportstrom-Syntax, der Programmstrom-Syntax oder der Paket-Elementarstrom-Syntax des kontinuierlichen Stroms von Audio- und/oder Videodaten (10) abgerufen werden.

16. Verfahren nach Anspruch 14 oder 15, wobei der kontinuierliche Strom von Audio- und/oder Videodaten (10) in einem Transportstromformat gemäß dem internationalen MPEG-Standard vorliegt und die vorhandenen Zeitstempel die Programmtakt-Bezugszeitstempel des Transportstroms sind.

17. Verfahren nach Anspruch 14 oder 15, wobei der kontinuierliche Strom von Audio- und/oder Videodaten (10) in einem Programmstrom-Format gemäß dem internationalen MPEG-Standard vorliegt und die Zeitstempel die Systemtakt-Bezugszeitstempel des Programmstroms sind.

18. Verfahren nach Anspruch 14 oder 15, wobei der kontinuierliche Strom von Audio- und/oder Videodaten (10) in einem Paket-Elementarstrom-Format vorliegt, das dem internationalen MPEG-Standard entspricht, und die Zeitstempel die Elementarstromtakt-Bezugszeitstempel des Paket-Elementarstroms sind.

19. Verfahren nach einem der Ansprüche 1 bis 18, das des Weiteren die folgenden Schritte umfasst:
Feststellen, ob der empfangene kontinuierliche Strom von Audio- und/oder Videodaten (10) Zusatzinformationen (23) enthält oder nicht, die Eigenschaften der zu sendenden Daten beschreiben,
Gewinnen der Zusatzinformationen (23) aus dem kontinuierlichen Strom von Audio- und/oder Videodaten (10), wenn festgestellt worden ist, dass Zusatzinformationen (23) in dem kontinuierlichen Strom von Audio- und/oder Videodaten (10) enthalten sind,
Analysieren des kontinuierlichen Stroms von Daten (10) und Erzeugen der Zusatzinformationen auf Basis der Ergebnisse davon, wenn festgestellt worden ist, dass keine Zusatzinformationen (23) in dem kontinuierlichen Strom von Audio- und/oder Videodaten (10) enthalten sind, und
Einfügen der Zusatzinformationen in die zu sendenden Daten (11).

20. Verfahren nach Anspruch 19, wobei die Feststellung enthaltener Zusatzinformationen auf separat bereitgestellten Informationen basiert.

21. Verfahren nach Anspruch 20, wobei die separat bereitgestellten Informationen in Form von Verweistabellen-Daten gespeichert sind.

22. Verfahren nach Anspruch 20 oder 21, wobei separat bereitgestellte Informationen in einem nicht flüchtigen überschreibbaren Speicher (26) gespeichert sind.

23. Verfahren nach einem der Ansprüche 19 bis 22, wobei sich die Zusatzinformationen auf Informationen beziehen, die von einer Nachbearbeitungseinrichtung (40) benötigt werden.

24. Verfahren nach Anspruch 19 oder 23, wobei die Zusatzinformationen Kodierparameter der Audio- und/oder Videodaten des zu sendenden Stroms von Audio- und/oder Videodaten (10) identifizieren.

25. Verfahren nach einem der Ansprüche 1 bis 24, das des Weiteren den Schritt des Ausbildens von Datenpaketen (11) aus dem kontinuierlichen Strom von Audio- und/oder Videodaten (10) zum Senden auf der Kommunikationsverbindung (2) umfasst.

26. Verfahren nach Anspruch 25, wobei jedes der Datenpakete (11) einen Nutzdatenabschnitt (15) zum Aufnehmen der Daten des kontinuierlichen Stroms von Audio- und/oder Videoinformationen (10) und einen Header-Abschnitt (17) umfasst, der Steuerinformationen aufnimmt wobei die Synchronisationsinformationen (25) in den Header-Abschnitt (17) eingefügt sind.

27. Verfahren nach Anspruch 26, das des Weiteren den Schritt des Einfügens der Zusatzinformationen in den Header-Abschnitt (17) jedes Datenpaketes (11) umfasst.

28. Verfahren nach einem der Ansprüche 1 bis 27, wobei die Kommunikationsverbindung (2) ein Fahrzeug-Multimedia-Bus ist.

29. Verfahren nach Anspruch 28, wobei der Fahrzeug-Multimedia-Bus gemäß dem internationalen MOST-Standard konfiguriert ist.

30. Sender zum Senden eines Stroms kontinuierlicher Audio- und/oder Videodaten (10) zu einem Empfänger auf einer Kommunikationsverbindung (2), wobei die Kommunikationsverbindung (2) Daten synchron zu einem ersten Taktsignal sendet, wobei er umfasst:
eine Zeitstempel-Erzeugungseinrichtung (24) zum Erzeugen von Synchronisationsinformationen (25) und
eine Multiplex-Einheit (22) zum Einfügen der erzeugten Synchronisationsinformationen (25) in den zu sendenden Strom kontinuierlicher Audio- und/oder Videodaten (10) und zum Senden des Stroms kontinuierlicher Audio-und/oder Videodaten (10) zusammen mit den eingefügten Synchronisationsinformationen (25),
**gekennzeichnet durch**
einen Speicher (26) zum Speichern von Verweistabellen-Daten,
eine Analysiereinheit (21) zum Analysieren des Stroms kontinuierlicher Audio-und/oder Videodaten (10) und zum Bestimmen des Typs verfügbarer Synchronisationsinformationen (25), wobei die Audio- und/oder Videodaten (10) auf Basis von Informationen analysiert werden, die separat in Form von Verweistabellen-Daten in dem Speicher (26) bereitgestellt werden, und die Informationen Datenformat-Eigenschaften enthalten, die in Verbindung mit entsprechenden Verarbeitungsinformationen gespeichert werden, wobei
die Zeitstempel-Erzeugungseinrichtung (24) so eingerichtet ist, dass sie Synchronisationsinformationen (25) gemäß dem Ergebnis der Analyse erzeugt.

31. Sender nach Anspruch 30, wobei der Speicher ein nicht flüchtiger überschreibbarer Speicher (26) zum Speichern der separat bereitgestellten Informationen für die Datenanalyse ist.

32. Sender nach Anspruch 30 oder 31, wobei die Analysiereinheit (21) so eingerichtet ist, dass sie feststellt, ob der Strom kontinuierlicher Audio- und/oder Videodaten (10) Zeitstempel (910) enthält oder nicht.

33. Sender nach Anspruch 32, wobei die Zeitstempel-Erzeugungseinrichtung (24) so eingerichtet ist, dass sie neue Zeitstempel (300) erzeugt, die in den Strom kontinuierlicher Audio- und/oder Videodaten (10) einzufügen sind, wenn festgestellt worden ist, dass der Strom kontinuierlicher Audio- und/oder Videodaten (10) keine Zeitstempel (910) enthält.

34. Sender nach Anspruch 33, wobei die Zeitstempel-Erzeugungseinrichtung (24) so eingerichtet ist, dass sie neue Zeitstempel (300) auf Basis der Einfügeposition in den gesendeten Strom von Daten (310) und auf Basis eines zweiten Taktes (44) erzeugt, wobei der zweite Takt (44) ein Takt des Stroms kontinuierlicher Audio- und/oder Videodaten (10) ist

35. Sender nach Anspruch 32, wobei die Zeitstempel-Erzeugungseinrichtung (24) so eingerichtet ist, dass sie neue Synchronisationsinformationen (25) erzeugt, indem sie die Werte von Zeitstempeln (910) korrigiert, die von dem Strom kontinuierlicher Audio- und/oder Videodaten (10) verfügbar sind, wenn festgestellt worden ist, dass der Strom kontinuierlicher Audio- und/oder Videodaten (10) Zeitstempel (910) enthält

36. Sender nach Anspruch 35, wobei die Zeitstempel-Erzeugungseinrichtung (24) so eingerichtet ist, dass sie die verfügbaren Zeitstempel (910) auf Basis der Einfügeposition in den gesendeten Strom von Daten (310) und auf Basis eines zweiten Taktes (44) korrigiert, wobei der zweite Takt (44) ein Takt des Stroms kontinuierlicher Audio- und/oder Videodaten (10) ist.

37. Sender nach Anspruch 32, wobei die Zeitstempel-Erzeugungseinrichtung (24) so eingerichtet ist, dass sie jeden verfügbaren Zeitstempel (910) beibehält und zusätzlich einen Korrekturwert (950) für jeden der verfügbaren Zeitstempel (910) erzeugt, wenn festgestellt worden ist, dass der Strom kontinuierlicher Audio- und/oder Videodaten (10) Zeitstempel (910) enthält

38. Sender nach Anspruch 37, wobei
die Analysiereinheit (21) des Weiteren so eingerichtet ist, dass sie feststellt, ob ein Takt (44) des Stroms kontinuierlicher Audio- und/oder Videodaten (10) verfügbar ist oder nicht, und die Zeitstempel-Erzeugungseinrichtung (24) so eingerichtet ist, dass sie die Korrekturwerte (950) erzeugt, wenn festgestellt worden ist, dass kein Takt (44) von dem Strom kontinuierlicher Audio-und/oder Videodaten (10) verfügbar ist.

39. Sender nach Anspruch 37 oder 38, wobei die Zeitstempel-Erzeugungseinrichtung (24) so eingerichtet ist, dass sie die Korrekturwerte (950) auf Basis des ersten Taktes erzeugt.

40. Sender nach einem der Ansprüche 34 bis 39, wobei die Zeitstempel-Erzeugungseinrichtung (24) so eingerichtet ist, dass sie die neuen Synchronisationsinformationen (25) durch Aufwärtszählen eines Zählwertes auf Basis des ersten Taktsignals oder des zweiten Taktsignals (44) erzeugt.

41. Sender nach einem der Ansprüche 30 bis 40, wobei die Analysiereinheit (21) so eingerichtet ist, dass sie das Datenformat der Daten des kontinuierlichen Stroms von Audio- und/oder Videodaten (10) identifiziert.

42. Sender nach einem der Ansprüche 35 bis 41, wobei der kontinuierliche Strom von Audio- und/oder Videodaten (10) in einem Format vorliegt, das dem internationalen MPEG-Standard entspricht, und die Zeitstempel (910) MPEG-Bezugszeitstempel sind.

43. Sender nach Anspruch 42, wobei die Zeitstempel-Erzeugungseinrichtung (24) so eingerichtet ist, dass sie die MPEG-Bezugs-Zeitstempel aus der Transportstrom-Syntax, der Programmstrom-Syntax oder der Paket-Elementarstrom-Syntax des kontinuierlichen Stroms von Audio- und/oder Videodaten (10) gewinnt.

44. Sender nach Anspruch 42 oder 43, wobei der kontinuierliche Strom von Audio- und/oder Videodaten (10) in einem Transportstrom-Format vorliegt, das dem internationalen MPEG-Standard entspricht, und die Zeitstempel die Programmtakt-Bezugszeitstempel des Transportstroms sind.

45. Sender nach Anspruch 42 oder 43, wobei der kontinuierliche Strom von Audio- und/oder Videodaten (10) in einem Programmstrom-Format vorliegt, das dem internationalen MPEG-Standard entspricht, und die Zeitstempel die Systemtakt-Bezugszeitstempel des Programmstroms sind.

46. Sender nach Anspruch 42 oder 43, wobei der kontinuierliche Strom von Audio- und/oder Videodaten (10) in einem Paket-Elementarstrom-Format vorliegt, das dem internationalen MPEG-Standard entspricht, und die vorhandenen Zeitstempel die Elementarstromtakt-Bezugszeitstempel des Paket-Elementarstroms sind.

47. Sender nach einem der Ansprüche 32 bis 46, wobei die Analysiereinheit (21) des Weiteren so eingerichtet ist, dass sie feststellt, ob der empfangene kontinuierliche Strom von Audio- und/oder Videodaten (10) Zusatzinformationen (23) enthält oder nicht, die Eigenschaften der zu sendenden Daten beschreiben, die Zusatzinformationen (23) aus dem kontinuierlichen Strom von Audio-und/oder Videodaten (10) gewinnt, wenn festgestellt worden ist, dass die Zusatzinformationen (23) in dem kontinuierlichen Strom von Audio- und/oder Videodaten (10) enthalten sind, den kontinuierlichen Strom von Daten (10) analysiert und die Zusatzinformationen (23) auf Basis der Ergebnisse der Analyse erzeugt, wenn festgestellt worden ist, dass keine Zusatzinformationen (23) in dem kontinuierlichen Strom von Audio- und/oder Videodaten (10) enthalten sind, und die Zusatzinformationen (23) dem Multiplexer (22) zum Einfügen in die zu sendenden Daten zuführt

48. Sender nach Anspruch 47, wobei die Feststellung enthaltener Zusatzinformationen auf separat bereitgestellten Informationen basiert.

49. Sender nach Anspruch 48, wobei die separat bereitgestellten Informationen in Form von Verweistabellen-Daten gespeichert sind.

50. Sender nach Anspruch 48 oder 49, wobei die separat bereitgestellten Informationen in einem nicht flüchtigen überschreibbaren Speicher (26) gespeichert sind.

51. Sender nach einem der Ansprüche 47 bis 50, wobei sich die Zusatzinformationen (23) auf Informationen beziehen, die von einer Nachbearbeitungseinrichtung (40) benötigt werden.

52. Sender nach einem der Ansprüche 47 bis 50, wobei die Zusatzinformationen (23) Codierparameter der Audio- und/oder Videodaten des zu sendenden Stroms von Audio- und/oder Videodaten (10) identifizieren.

53. Sender nach einem der Ansprüche 32 bis 49, wobei der Multiplexer (22) des Weiteren so eingerichtet ist, dass er Datenpakete (11) aus dem kontinuierlichen Strom von Audio- und/oder Videodaten (10) zum Senden auf der Kommunikationsverbindung (2) ausbildet.

54. Sender nach Anspruch 53, wobei jedes der Datenpakete (11) einen Nutzdaten-Abschnitt (15) zum Aufnehmen der Daten des kontinuierlichen Stroms von Audio- und/oder Videodaten (10) und einen Header-Abschnitt (17) umfasst, der Steuerinformationen aufnimmt, wobei die Synchronisationsinformationen (25) in den Header-Abschnitt (17) eingefügt sind.

55. Sender nach Anspruch 54, wobei der Multiplexer (22) des Weiteren so eingerichtet ist, dass er die Zusatzinformationen in den Header-Abschnitt (17) jedes Datenpakets (11) einfügt.

56. Sender nach einem der Ansprüche 33 bis 55, wobei die Kommunikationsverbindung (2) ein Fahrzeug-Multimedia-Bus ist

57. Sender nach Anspruch 56, wobei der Fahrzeug-Multimedia-Bus gemäß dem internationalen MOST-Standard konfiguriert ist

58. Fahrzeug-Informations-und-Unterhaltungs-System zum Senden eines Stroms kontinuierlicher Audio- und/oder Videodaten (10) von einem Sender zu einem Empfänger auf einer Kommunikationsverbindung (2), das so eingerichtet ist, dass es Daten synchron zu einem ersten Taktsignal sendet, wobei das Fahrzeug-Informations-und-Unterhaltungs-System einen Sender (4) zum Senden des kontinuierlichen Stroms von Daten (10) auf der Kommunikationsverbindung (2) und einen Empfänger (7) zum Empfangen eines kontinuierlichen Stroms von Daten (310) von der Kommunikationsverbindung (2) umfasst und der Sender (4) einem der Ansprüche 30 bis 57 entspricht.

59. Fahrzeug-Informations-und-Unterhaltungs-System nach Anspruch 58, wobei der Empfänger (7) so eingerichtet ist, dass er die gesendeten Daten (310) zusammen mit den Synchronisationsinformationen (25) von der Kommunikationsverbindung (2) empfängt die Synchronisationsinformationen (25) aus den empfangenen Daten (310) extrahiert, ein Taktsignal (39) auf Basis der extrahierten Synchronisationsinformationen (25) wiedergewinnt, einen kontinuierlichen Strom von Daten (330) auf Basis der empfangenen Daten (310) und des wiedergewonnenen Taktsignals (39) rekonstruiert und den rekonstruierten Strom von Daten (330) zusammen mit dem wiedergewonnenen Taktsignal (39) ausgibt.

60. Fahrzeug-Informations-und-Unterhaltungs-System nach Anspruch 59, wobei der Empfänger (7) so eingerichtet ist, dass er Zeitstempel (910) und Korrekturwerte (950) als die Synchronisationsinformationen (25) extrahiert.

61. Fahrzeug-Informations-und-Unterhaltungs-System nach Anspruch 60, wobei der Empfänger (7) des Weiteren so eingerichtet ist, dass er den empfangenen Strom von Daten (310) analysiert, um festzustellen, ob die empfangenen Synchronisationsinformationen einen Korrekturwert (950) enthalten, und den Strom von Daten (330) demgemäß rekonstruiert.

62. Fahrzeug-Informations-und-Unterhaltungs-System nach Anspruch 60 oder 61, wobei jeder Korrekturwert (950) einen Offset (980) eines einzelnen Datenpakets (900) des empfangenen Stroms von Daten (945) in Bezug auf Zeit anzeigt.

63. Fahrzeug-Informations-und-Unterhaltungs-System nach Anspruch 62, wobei eine einzelne Position jedes empfangenen Datenpakets (900) innerhalb des Datenstroms (330) auf Basis des Offset (980) festgestellt wird, der durch einen Korrekturwert (950) angezeigt wird.

64. Fahrzeug-Informations-und-Unterhaltungs-System nach Anspruch 63, wobei das Taktsignal (39) auf Basis der Zeitstempel (910) des rekonstruierten Datenstroms (330) wiedergewonnen wird.

## Revendications

1. Procédé destiné à transmettre un flux de données audio et/ou vidéo continu (10) depuis un émetteur jusqu'à un récepteur sur une liaison de communication (2) dans lequel ladite liaison de communication (2) transmet des données en synchronisation avec un premier signal d'horloge, comprenant les étapes consistant à :
analyser ledit flux de données audio et/ou vidéo continu (10) et déterminer le type d'informations de synchronisation disponibles, étape dans laquelle lesdites données audio et/ou vidéo (10) sont analysées sur la base d'informations fournies séparément sous forme de données de table de conversion dans une mémoire (26), lesdites informations comportant des propriétés de format de données stockées en association avec des informations de traitement appropriées, et
générer de nouvelles informations de synchronisation (25) conformément au résultat de l'analyse pour une insertion dans ledit flux de données audio et/ou vidéo continu (10),
insérer lesdites informations de synchronisation (25) générées dans ledit flux de données audio et/ou vidéo continu (10) à transmettre, et
transmettre ledit flux de données audio et/ou vidéo continu conjointement avec lesdites nouvelles informations de synchronisation (25).

2. Procédé selon la revendication 1, dans lequel ladite mémoire est une mémoire réinscriptible non volatile (26).

3. Procédé selon la revendication 1 ou 2, dans lequel ladite étape consistant à déterminer le type d'informations de synchronisation détermine si oui ou non ledit flux de données audio et/ou vidéo continu (10) contient des marqueurs temporels (910).

4. Procédé selon la revendication 3, dans lequel ladite étape consistant à générer de nouvelles informations de synchronisation génère de nouveaux marqueurs temporels (300) à insérer dans ledit flux de données audio et/ou vidéo continu (10) s'il a été déterminé que ledit flux de données audio et/ou vidéo continu (10) ne contient pas de marqueurs temporels (910).

5. Procédé selon la revendication 4, dans lequel lesdits nouveaux marqueurs temporels (300) sont générés sur la base de la position d'insertion dans le flux de données (310) à transmettre et sur la base d'une seconde horloge (44), ladite seconde horloge (44) étant une horloge dudit flux de données audio et/ou vidéo continu (10).

6. Procédé selon la revendication 3, dans lequel ladite étape consistant à générer de nouvelles informations de synchronisation corrige les valeurs de marqueurs temporels (910) disponibles obtenues à partir dudit flux de données audio et/ou vidéo continu (10) s'il a été déterminé que ledit flux de données audio et/ou vidéo continu (10) contient des marqueurs temporels (910).

7. Procédé selon la revendication 6, dans lequel lesdits marqueurs temporels (910) disponibles sont corrigés sur la base de la position d'insertion dans le flux de données (310) à transmettre et sur la base d'une seconde horloge (44), et ladite seconde horloge (44) est une horloge dudit flux de données audio et/ou vidéo continu (10).

8. Procédé selon la revendication 3, dans lequel ladite étape consistant à générer de nouvelles informations de synchronisation maintient chaque marqueur temporel (910) disponible et génère en plus une valeur de correction (950) pour chaque marqueur temporel (910) existant s'il a été déterminé que ledit flux de données audio et/ou vidéo continu (10) contient des marqueurs temporels (910).

9. Procédé selon la revendication 8, dans lequel ladite étape consistant à déterminer le type d'informations de synchronisation détermine en outre si oui ou non une horloge (44) dudit flux de données audio et/ou vidéo continu (10) est disponible, et lesdites valeurs de correction (950) sont générées s'il a été déterminé qu'il n'y a pas de telles horloges disponibles.

10. Procédé selon la revendication 8 ou 9, dans lequel les lesdites valeurs de correction (950) sont générées sur la base de ladite première horloge.

11. Procédé selon la revendication 5 ou 7, dans lequel ledit second signal d'horloge (44) est reçu à partir d'une unité de traitement (42) fournissant le flux continu de données audio et/ou vidéo (43).

12. Procédé selon l'une quelconque des revendications 5 à 11, dans lequel ladite étape consistant à générer de nouvelles informations de synchronisation (25) fait progresser en comptant une valeur de compte sur la base dudit premier signal d'horloge ou dudit second signal d'horloge (44).

13. Procédé selon l'une quelconque des revendications 1 à 12, dans lequel ladite étape d'analyse comprend l'étape consistant à identifier le format de données desdites données dudit flux continu de données audio et/ou vidéo (10).

14. Procédé selon l'une quelconque des revendications 3 à 13, dans lequel ledit flux continu de données audio et/ou vidéo (10) est dans un format conformément à la norme internationale MPEG et lesdits marqueurs temporels (910) sont des marqueurs temporels de référence MPEG.

15. Procédé selon la revendication 14, dans lequel lesdits marqueurs temporels de référence MPEG sont récupérés à partir de la syntaxe de flux de transport, la syntaxe de flux de programme ou la syntaxe de flux élémentaire en paquets du flux continu de données audio et/ou vidéo (10).

16. Procédé selon la revendication 14 ou 15, dans lequel ledit flux continu de données audio et/ou vidéo (10) est dans un format de flux de transport conformément à la norme internationale MPEG et lesdits marqueurs temporels existants sont des marqueurs temporels de référence d'horloge de programme du flux de transport.

17. Procédé selon la revendication 14 ou 15, dans lequel ledit flux continu de données audio et/ou vidéo (10) est dans un format de flux de programme conformément à la norme internationale MPEG et lesdits marqueurs temporels sont les marqueurs temporels de référence d'horloge de système du flux de programme.

18. Procédé selon la revendication 14 ou 15, dans lequel ledit flux continu de données audio et/ou vidéo (10) est dans un format de flux élémentaire en paquets conformément à la norme internationale MPEG et lesdits marqueurs temporels sont les marqueurs temporels de référence d'horloge de flux élémentaire du flux élémentaire en paquets.

19. Procédé selon l'une quelconque des revendications 1 à 18, comprenant en outre les étapes consistant à :
déterminer si oui ou non le flux continu reçu de données audio et/ou vidéo (10) comporte des informations auxiliaires (23) décrivant des propriétés des données à transmettre,
obtenir lesdites informations auxiliaires (23) à partir dudit flux continu de données audio et/ou vidéo (10) s'il a été déterminé que des informations auxiliaires (23) sont incluses dans le flux continu de données audio et/ou vidéo (10),
analyser le flux continu de données (10) et générer lesdites informations auxiliaires sur la base des résultats de l'analyse s'il a été déterminé que des informations auxiliaires (23) ne sont pas incluses dans ledit flux continu de données audio et/ou vidéo (10), et
insérer les informations auxiliaires dans les données (11) à transmettre.

20. Procédé selon la revendication 19, dans lequel ladite détermination d'informations auxiliaires incluses est basée sur des informations fournies séparément.

21. Procédé selon la revendication 20, dans lequel lesdites informations fournies séparément sont stockées sous forme de données de table de conversion.

22. Procédé selon la revendication 20 ou 21, dans lequel des informations fournies séparément sont stockées dans une mémoire réinscriptible non volatile (26).

23. Procédé selon l'une quelconque des revendications 19 à 22, dans lequel lesdites informations auxiliaires concernent des informations dont a besoin un dispositif de traitement postérieur (40).

24. Procédé selon la revendication 19 ou 23, dans lequel lesdites informations auxiliaires identifient des paramètres de codage de données audio et/ou vidéo du flux de données audio et/ou vidéo (10) à transmettre.

25. Procédé selon l'une quelconque des revendications 1 à 24, comprenant en outre l'étape consistant à former des paquets de données (11) à partir du flux continu de données audio et/ou vidéo (10) pour une transmission sur ladite liaison de communication (2).

26. Procédé selon la revendication 25, dans lequel chacun parmi les paquets de données (11) comprend une portion de charge utile (15) destinée à recevoir les données dudit flux continu de données audio et/ou vidéo (10) et une portion d'en-tête (17) recevant des informations de commande, lesdites informations de synchronisation (25) étant insérées dans ladite portion d'en-tête (17).

27. Procédé selon la revendication 26, comprenant en outre l'étape consistant à insérer les informations auxiliaires dans la portion d'en-tête (17) de chaque paquet de données (11).

28. Procédé selon l'une quelconque des revendications 1 à 27, dans lequel ladite liaison de communication (2) est un bus multimédia de véhicule.

29. Procédé selon la revendication 28, dans lequel ledit bus multimédia de véhicule est configuré conformément à la norme internationale MOST.

30. Emetteur destiné à transmettre un flux de données audio et/ou vidéo continu (10) à un récepteur sur une liaison de communication (2) dans lequel ladite liaison de communication (2) transmet des données en synchronisation avec un premier signal d'horloge, comprenant :
un générateur (24) de marqueurs temporels destiné à générer des informations de synchronisation (25), et
une unité formant multiplexeur (22) destinée à insérer les informations de synchronisation (25) générées dans ledit flux de données audio et/ou vidéo continu à transmettre et destinée à transmettre ledit flux de données audio et/ou vidéo continu conjointement avec lesdites informations de synchronisation (25) insérées
**caractérisé par**
une mémoire (26) destinée à stocker des données de table de conversion
une unité d'analyse (21) destinée à analyser le flux de données audio et/ou vidéo continu (10) et déterminer le type d'informations de synchronisation (25) disponibles, dans laquelle lesdites données audio et/ou vidéo (10) sont analysées sur la base d'informations fournies séparément sous forme de données de table de conversion dans ladite mémoire (26), lesdites informations comportant des propriétés de format de données stockées en association avec des informations de traitement appropriées, dans lesquelles
ledit générateur de marqueurs temporels (24) est adapté à générer des informations de synchronisation (25) conformément au résultat de l'analyse.

31. Emetteur selon la revendication 30, dans lequel ladite mémoire est une mémoire réinscriptible non volatile (26) destinée à stocker lesdites informations fournies séparément pour l'analyse de données.

32. Emetteur selon la revendication 30 ou 31, dans lequel ladite unité d'analyse (21) est adaptée afin de déterminer si oui ou non ledit flux de données audio et/ou vidéo continu (10) contient des marqueurs temporels (910).

33. Emetteur selon la revendication 32, dans lequel ledit générateur (24) de marqueurs temporels est adapté afin de générer de nouveaux marqueurs temporels (300) à insérer dans ledit flux de données audio et/ou vidéo continu (10) s'il a été déterminé que ledit flux de données audio et/ou vidéo continu (10) ne contient pas de marqueurs temporels (910).

34. Emetteur selon la revendication 33, dans lequel ledit générateur (24) de marqueurs temporels est adapté afin de générer de nouveaux marqueurs temporels (300) sur la base de la position d'insertion dans le flux de données (310) transmis et sur la base d'une seconde horloge (44), ladite seconde horloge (44) étant une horloge dudit flux de données audio et/ou vidéo continu (10).

35. Emetteur selon la revendication 32, dans lequel ledit générateur (24) de marqueurs temporels est adapté afin de générer de nouvelles informations de synchronisation (25) en corrigeant les valeurs de marqueurs temporels (910) disponibles à partir dudit flux de données audio et/ou vidéo continu (10) s'il a été déterminé que ledit flux de données audio et/ou vidéo continu (10) contient des marqueurs temporels (910).

36. Emetteur selon la revendication 35, dans lequel ledit générateur (24) de marqueurs temporels est adapté afin de corriger lesdits marqueurs temporels (910) disponibles sur la base de la position d'insertion dans le flux de données (310) transmis et sur la base d'une seconde horloge (44), ladite seconde horloge (44) étant une horloge dudit flux de données audio et/ou vidéo continu (10).

37. Emetteur selon la revendication 32, dans lequel ledit générateur (24) de marqueurs temporels est adapté afin de maintenir chaque marqueur temporel (910) disponible et de plus, afin de générer une valeur de correction (950) pour chacun parmi les marqueurs temporels (910) disponibles s'il a été déterminé que ledit flux de données audio et/ou vidéo continu (10) contient des marqueurs temporels (910).

38. Emetteur selon la revendication 37, dans lequel
ladite unité d'analyse (21) est en outre adaptée afin de déterminer si oui ou non une horloge (44) dudit flux de données audio et/ou vidéo continu (10) est disponible, et ledit générateur (24) de marqueurs temporels est adapté afin de générer lesdites valeurs de correction (950) s'il a été déterminé qu'il n'y a pas d'horloge (44) disponible à partir dudit flux de données audio et/ou vidéo continu (10).

39. Emetteur selon la revendication 37 ou 38, dans lequel ledit générateur (24) de marqueurs temporels est adapté afin de générer lesdites valeurs de correction (950) sur la base de ladite première horloge.

40. Emetteur selon l'une quelconque des revendications 34 à 39, dans lequel ledit générateur (24) de marqueurs temporels est adapté afin de générer lesdites nouvelles informations de synchronisation (25) en faisant progresser en comptant une valeur de compte sur la base dudit premier signal d'horloge ou dudit second signal d'horloge (44).

41. Emetteur selon l'une quelconque des revendications 30 à 40, dans lequel ladite unité d'analyse (21) est adaptée afin d'identifier le format de données desdites données dudit flux continu de données audio et/ou vidéo (10).

42. Emetteur selon l'une quelconque des revendications 35 à 41, dans lequel ledit flux continu de données audio et/ou vidéo (10) est dans un format conformément à la norme internationale MPEG et lesdits marqueurs temporels (910) sont des marqueurs temporels de référence MPEG.

43. Emetteur selon la revendication 42, dans lequel ledit générateur (24) de marqueurs temporels est adapté afin d'obtenir lesdits marqueurs temporels de référence MPEG à partir de la syntaxe de flux de transport, la syntaxe de flux de programme ou la syntaxe de flux élémentaire en paquets du flux continu de données audio et/ou vidéo (10).

44. Emetteur selon la revendication 42 ou 43, dans lequel ledit flux continu de données audio et/ou vidéo (10) est dans un format de flux de transport conformément à la norme internationale MPEG et lesdits marqueurs temporels sont les marqueurs temporels de référence d'horloge de programme du flux de transport.

45. Emetteur selon l'une quelconque des revendications 42 ou 43, dans lequel ledit flux continu de données audio et/ou vidéo (10) est dans un format de flux de programme conformément à la norme internationale MPEG et lesdits marqueurs temporels sont les marqueurs temporels de référence d'horloge de système du flux de programme.

46. Emetteur selon la revendication 42 ou 43, dans lequel ledit flux continu de données audio et/ou vidéo (10) est dans un format de flux élémentaire en paquets conformément à la norme internationale MPEG et lesdits marqueurs temporels existants sont les marqueurs temporels de référence d'horloge de flux élémentaire du flux élémentaire en paquets.

47. Emetteur selon l'une quelconque des revendications 32 à 46, dans lequel ladite unité d'analyse (21) est en outre adaptée afin de déterminer si oui ou non le flux continu reçu de données audio et/ou vidéo (10) comporte des informations auxiliaires (23) décrivant des propriétés de données à transmettre, afin d'obtenir lesdites informations auxiliaires (23) à partir dudit flux continu de données audio et/ou vidéo (10) s'il a été déterminé que des informations auxiliaires (23) sont incluses dans le flux continu de données audio et/ou vidéo (10), afin d'analyser le flux continu de données (10) et afin de générer lesdites informations auxiliaires (23) sur la base des résultats de l'analyse s'il a été déterminé que des informations auxiliaires (23) ne sont pas incluses dans ledit flux continu de données audio et/ou vidéo (10), et afin de délivrer les informations auxiliaires (28) audit multiplexeur (22) pour une insertion dans lesdites données à transmettre.

48. Emetteur selon la revendication 47, dans lequel ladite détermination d'informations auxiliaires incluses est basée sur des informations fournies séparément.

49. Emetteur selon la revendication 48, dans lequel lesdites informations fournies séparément sont stockées sous forme de données de table de conversion.

50. Emetteur selon la revendication 48 ou 49, dans lequel des informations fournies séparément sont stockées dans une mémoire réinscriptible non volatile (26).

51. Emetteur selon l'une quelconque des revendications 47 à 50, dans lequel lesdites informations auxiliaires (23) concernent des informations dont a besoin un dispositif de traitement postérieur (40).

52. Emetteur selon l'une quelconque des revendications 47 à 50, dans lequel lesdites informations auxiliaires (23) identifient des paramètres de codage des données audio et/ou vidéo du flux de données audio et/ou vidéo (10) à transmettre.

53. Emetteur selon l'une quelconque des revendications 32 à 49, dans lequel ledit multiplexeur (22) est en outre adapté afin de former des paquets de données (11) à partir du flux continu de données audio et/ou vidéo (10) pour une transmission sur ladite liaison de communication (2).

54. Emetteur selon la revendication 53, dans lequel chacun parmi les paquets de données (11) comprend une portion de charge utile (15) destinée à recevoir les données dudit flux continu de données audio et/ou vidéo (10) et une portion d'en-tête (17) recevant des informations de commande, lesdites informations de synchronisation (25) étant insérées dans ladite portion den-tête (17).

55. Emetteur selon la revendication 54, dans lequel ledit multiplexeur (22) est en outre adapté afin d'insérer les informations auxiliaires dans la portion d'en-tête (17) de chaque paquet de données (11).

56. Emetteur selon l'une quelconque des revendications 30 à 55, dans lequel ladite liaison de communication (2) est un bus multimédia de véhicule.

57. Emetteur selon la revendication 56, dans lequel ledit bus multimédia de véhicule est configuré conformément à la norme internationale MOST.

58. Système d'information et de divertissement pour véhicule destiné à transmettre un flux de données audio et/ou vidéo continu (10) depuis un émetteur jusqu'à un récepteur sur une liaison de communication (2), étant adapté afin de transmettre des données en synchronisation avec un premier signal d'horloge, ledit système d'information et de divertissement pour véhicule comprend un émetteur (4) destiné à transmettre ledit flux continu de données (10) sur ladite liaison de communication (2), et un récepteur (7) destiné à recevoir un flux continu de données (310) à partir de ladite liaison de communication (2), ledit émetteur (4) étant réalisé selon l'une quelconque des revendications 30 à 57.

59. Système d'information et de divertissement pour véhicule selon la revendication 58, dans lequel ledit récepteur (7) est adapté afin de recevoir les données (310) transmises conjointement avec lesdites informations de synchronisation (25) à partir de ladite liaison de communication (2), afin d'extraire les informations de synchronisation (25) à partir desdites données (310) reçues, afin de récupérer un signal d'horloge (39) sur la base des informations de synchronisation (25) extraites, afin de reconstruire un flux continu de données (330) sur la base des données (310) reçues et du signal d'horloge (39) récupéré, et afin de sortir le flux de données (330) reconstruit conjointement avec le signal d'horloge (39) récupéré.

60. Système d'information et de divertissement pour véhicule selon la revendication 59, dans lequel ledit récepteur (7) est adapté afin d'extraire des marqueurs temporels (910) et des valeurs de correction (950) en tant que lesdites informations de synchronisation (25).

61. Système d'information et de divertissement pour véhicule selon la revendication 60, dans lequel ledit récepteur (7) est en outre adapté afin d'analyser le flux de données (310) reçu pour déterminer si les informations de synchronisation reçues comportent une valeur de correction (950) et pour reconstruire le flux de données (330) en conséquence.

62. Système d'information et de divertissement pour véhicule selon la revendication 60 ou 61, dans lequel chaque valeur de correction (950) indique un décalage (980) d'un paquet de données individuel (900) du flux de données (945) reçu par rapport au temps.

63. Système d'information et de divertissement pour véhicule selon la revendication 62, dans lequel une position individuelle de chaque paquet de données (900) reçu à l'intérieur du flux de données (330) est déterminée sur la base dudit décalage (980) indiqué par une valeur de correction (950).

64. Système d'information et de divertissement pour véhicule selon la revendication 63, dans lequel ledit signal d'horloge (39) est récupéré sur la base desdits marqueurs temporels (910) dudit flux de données (330) reconstruit.
